# FASCICULE DE BREVET EUROPEEN

(11) **EP 2 612 467 B1**
(45) Date de publication et mention de la délivrance du brevet: **10.06.2020**
(21) Numéro de dépôt: 11758526.5
(22) Date de dépôt: 19.08.2011
(51) Int. Cl.: H04L 12/28

(54) **SYSTÈME DE DIFFUSION DE DONNÉES CIBLÉES**
SYSTEM ZUR SENDUNG VON GEZIELTEN DATEN
SYSTEM FOR BROADCASTING TARGETED DATA

(30) Priorité: 30.08.2010 FR 1056838
(43) Date de publication de la demande: 10.07.2013
(73) Titulaire: Cybronics SASU, 75004 Paris (FR)
(72) Inventeur: DEROZARD, Jérôme, F-75004 Paris (FR)
(74) Mandataire: Verriest, Philippe
(86) Numéro de dépôt international: PCT/FR2011/051936
(87) Numéro de publication internationale: WO 2012/028803

(56) Documents cités:
- WO-A2-2008/013379
- WO-A2-2008/150815
- US-A1- 2008 133 970

## Description

La présente invention a pour objet un système de diffusion d'information ciblée pour un réseau domestique connecté à un réseau distant, tel le réseau Internet, au moins un appareil électronique pouvant être connecté à ce réseau domestique ainsi qu'un procédé de mise en œuvre d'un tel système.

Les documents US2008/0133970, WO2008/013379 et WO2008/150815 décrivent des systèmes de diffusion d'information dans un réseau domestique.

Avec la généralisation des réseaux domestiques de type Wi-Fi, Bluetooth, Zigbee, Ethernet ou CPL (Courant Porteur de Ligne) et d'appareils électroniques grand public compatibles, une nouvelle génération de services internet se développe pouvant être utilisés sans nécessairement utiliser un ordinateur ou un ordiphone.

La liste d'appareils ainsi connectés inclut les postes de radio et télévision, les équipements d'enregistrement et de diffusion audiovisuelle tels que les enregistreurs vidéo, lecteurs DVD/Blu-Ray ou les composants hi-fi, les tablettes et cadres photo numériques, mais aussi les appareils électroménagers, les compteurs électriques intelligents et les appareils de télésurveillance.

La connexion à internet permet à ces appareils d'accéder à de nouveaux services, à des contenus, de bénéficier de mises à jour distantes, et de fournir des informations sur leur utilisation.

En particulier, il devient possible d'utiliser les appareils connectés pour diffuser des contenus ciblés en complément des canaux de diffusion habituels que sont les ordinateurs personnels ou les téléphones intelligents. De plus, ces appareils peuvent être munis de « capteurs » qui peuvent être utilisés pour sélectionner les contenus sur la base des évènements détectés au cours de leur fonctionnement.

Par exemple, une télévision peut enregistrer des informations sur le type de contenu (chaîne, émission, film) visionné par l'utilisateur, un composant hi-fi peut connaître les goûts musicaux de l'utilisateur, un compteur électrique intelligent peut enregistrer l'historique de consommation des appareils électriques, un réfrigérateur peut dresser un inventaire des produits stockés, une machine à café peut indiquer lorsque la réserve est épuisée. Ces informations peuvent être utilisées pour exécuter des actions permettant de fournir des informations ciblées et contextuelles à l'utilisateur, par exemple une information ciblée pour des contenus vidéos complémentaires, pour un album musical, pour une offre d'électricité adaptée à la consommation du ménage, une offre promotionnelle pour un produit alimentaire, pour une recharge de café.

La principale application de la diffusion de contenus ciblés est la possibilité de transmettre une information en fonction du contexte de l'utilisateur, au moment même où un évènement est détecté dans son environnement. Ce type d'information contextuelle est déjà largement exploité sur ordinateur, avec la diffusion d'informations en fonction des recherches effectuées par l'utilisateur sur son moteur de recherche ou de l'historique des sites visités, et sur le téléphone mobile, avec la diffusion d'informations mobiles en fonction de la localisation de l'utilisateur.

Cependant, plusieurs problèmes se posent pour mettre en œuvre ces « informations contextuelles domestiques ».

Tout d'abord, les appareils connectés ne disposent pas tous à la fois de fonctions permettant de capter des informations d'utilisation et d'exécuter les actions correspondantes, telles qu'afficher des informations.

Certains appareils possèdent des capacités de détection avancée, par exemple un compteur électrique peut donner des informations sur les habitudes de consommation de l'utilisateur, sur le type d'appareils branchés sur le réseau électrique ou sur la nécessité d'une opération de maintenance, mais possède le plus souvent des capacités de diffusion limitées ; d'autres possèdent au contraire des capacités de diffusion étendues, tels que les télévisions ou les cadres photos, mais des capacités de détection limitées.

Ensuite, le ciblage peut nécessiter l'utilisation d'informations en provenance de plusieurs appareils qui doivent être analysées avant d'être utilisées.

Puis, la sélection des actions à exécuter nécessite des traitements complexes qui peuvent dépasser les capacités des objets connectés.

L'exécution des actions sélectionnées peut aussi nécessiter des capacités utilisant plus d'un appareil.

De plus, le fait de sélectionner des informations sur la base d'évènements détectés par des objets domestiques pose des problèmes au niveau de la protection de la vie privée des utilisateurs.

En effet, la transmission directe des données fournies par les objets connectés à un serveur distant chargé de les analyser, sans moyen pour l'utilisateur de contrôler les informations transmises, pose le risque d'une utilisation détournée de ces données tandis que leur stockage hors du contrôle de l'utilisateur contrevient aux principes de protection et d'accès aux données privées.

Enfin, lorsqu'une information déclenche une transaction pour un service, il est nécessaire de pouvoir déterminer tous les événements qui ont mené à cette transaction afin de rémunérer les différents intervenants et d'améliorer le processus de ciblage.

Les solutions actuelles à ce problème sont de plusieurs ordres. Chaque appareil disposant de fonctions connectées est la plupart du temps relié à une plateforme de service dédiée opérée par le fabricant qui va être chargée de réceptionner des informations en provenance de l'appareil. Cette plateforme peut aussi être utilisée pour diffuser des informations en lien avec les informations reçues, soit via l'appareil lui-même, soit via un appareil de type ordinateur, tablette ou ordiphone.

Une autre solution est l'utilisation d'un appareil relais contrôlé par un opérateur tiers, tels qu'une passerelle d'accès à internet haut débit (« box ADSL ») ou un compteur électrique intelligent, pour surveiller les appareils à l'intérieur du réseau domestique (réseau électrique ou réseau local), détecter des évènements et les remonter vers un serveur central. Celui-ci sera chargé de les analyser et de déclencher une diffusion d'information via un appareil de type ordinateur, tablette ou ordiphone.

Enfin une dernière solution consiste en l'intégration sur un terminal intelligent de type ordinateur, tablette ou ordiphone de capteurs ou de relais permettant de communiquer directement avec chaque appareil connecté. Sur requête de l'utilisateur, le terminal intelligent peut lire des informations sur chaque appareil du réseau domestique, notifier un serveur qui lui retourne une information correspondante et afficher celle-ci instantanément sur l'écran du terminal.

Chaque solution actuellement proposée possède ses propres limitations. L'utilisation d'une plateforme séparée pour chaque appareil connecté empêche de combiner des informations en provenance de plusieurs appareils pour rendre les informations plus ciblées. En outre dans le cas où l'appareil ne dispose pas de fonctions de diffusion, la diffusion de l'information doit être faite via un autre canal, et nécessite que l'utilisateur soit connecté sur la plateforme ou ait préalablement entré ses coordonnées sur celle-ci pour pouvoir recevoir les informations fournies.

L'utilisation d'un appareil relais contrôlé par un tiers comme une passerelle internet haut débit ou un compteur électrique intelligent nécessite que l'ensemble des appareils connectés, quel que soit leur fabricant, soit capable de communiquer avec l'appareil relais, en utilisant le même réseau de communication et les mêmes protocoles. Ensuite, la diffusion nécessite un serveur central à même de récupérer les informations en provenance de chaque appareil relais, de sélectionner les informations existantes à diffuser et de les diffuser, ce qui peut se révéler très consommateur en terme de performances dans le cas de la gestion d'un grand nombre d'utilisateurs et d'appareils. Enfin la diffusion de l'information nécessite que l'utilisateur dispose d'un appareil spécifique ou ait préalablement entré ses coordonnées pour pouvoir recevoir les informations mises à disposition.

Dans les diverses solutions actuellement proposées, le système est centralisé et requiert l'utilisation d'un serveur central, en général relié à un seul appareil de diffusion, auquel chaque appareil du réseau doit être raccordé et configuré.

Le bon fonctionnement du système avec son réseau domestique connecté est donc dépendant de la bonne configuration et du bon fonctionnement du serveur central et de la connexion de chaque appareil du réseau domestique à celui-ci.

L'utilisation d'un terminal de type ordinateur, tablette ou ordiphone pour détecter et sélectionner les informations pose d'autres problèmes. L'appareil doit disposer des capteurs ou relais compatibles avec chaque appareil connecté. Le système ne fonctionne que lorsque l'appareil est présent et connecté au réseau domestique, ce qui pose problème dans le cas d'un ordiphone qui par définition est mobile ou d'un ordinateur qui n'est pas allumé en permanence.

L'utilisateur doit au préalable initialiser l'appareil avant que celui-ci ne puisse détecter un évènement et diffuser un contenu associé. L'appareil n'a pas accès non plus aux évènements qui auraient été détectés avant son initialisation.

Enfin, quelle que soit la solution sélectionnée, le fait d'utiliser un serveur unique centralisé extérieur au réseau de l'utilisateur pour détecter les informations dans l'entourage d'un utilisateur et diffuser d'autres informations en relation avec celles-ci pose d'importants problèmes au niveau de la protection de la vie privée. En effet, ces méthodes aboutissent à une surveillance à distance de l'utilisateur ainsi qu'au stockage sur un serveur distant des informations récupérées en continu depuis le réseau de l'utilisateur puis leur association à l'identité des utilisateurs afin de pouvoir les cibler. Cela implique que ces méthodes peuvent être facilement détournées à des fins nuisibles, et contribuer à freiner l'adoption de ces technologies par des utilisateurs soucieux de préserver leur vie privée et leur sécurité.

La présente invention a pour but de résoudre tout ou partie des inconvénients mentionnés ci-dessus.

A cet effet, la présente invention a pour objet un système de diffusion d'information ciblée pour un réseau domestique sur lequel est connecté au moins un appareil électronique comprenant des moyens de traitement, ledit système de diffusion comprenant au moins un agent détecteur d'un évènement prédéfini, l'au moins un agent détecteur étant disposé sur l'au moins un appareil électronique, au moins un agent sélectionneur d'une action à réaliser, l'au moins un agent sélectionneur étant disposé sur l'au moins un appareil électronique; et au moins un agent diffuseur d'un contenu d'information ciblée à destination d'un utilisateur final, l'au moins un agent diffuseur étant disposé sur l'au moins un appareil électronique. L'au moins un agent détecteur étant agencé pour collecter des informations générées par au moins un capteur matériel équipant le ou les appareils électroniques suite à la détection d'un évènement par l'au moins un capteur matériel, pour interpréter ces informations à l'aide d'une base de données locale d'évènements comprenant un ensemble de définitions d'évènements, pour associer à l'évènement une structure de donnée d'évènement identifié parmi l'ensemble de définitions d'évènements, chacune étant associé à un identifiant électronique unique d'évènement, et pour publier l'identifiant électronique d'évènement associé à l'évènement identifié dans un flux d'évènements parcourant le réseau domestique, pour notifier l'au moins un agent sélectionneur de la mise à jour du flux d'évènements parcourant le réseau domestique à l'aide d'une adresse de notification de l'au moins un agent sélectionneur stockée dans une base de donnée locale, l'au moins un agent sélectionneur étant agencé pour collecter le flux d'évènements parcourant le réseau domestique, pour interpréter l'identifiant électronique associé à l'évènement identifié assimilé au flux d'évènements à l'aide d'une base de données locale d'actions comprenant un ensemble de définitions d'actions, pour en déduire la sélection d'une action de l'ensemble de définitions d'actions en fonction de l'identifiant électronique de l'évènement identifié, chacune étant associée à un identifiant électronique unique d'action et à l'aide d'une base de données locale d'actions contenant des règles de ciblage, et pour publier l'identifiant électronique associé à l'action sélectionnée dans un flux d'actions parcourant le réseau domestique, pour se connecter sur une base de données d'actions distante afin de mettre à jour la base de données locale d'actions au travers d'un flux de mise à jour, pour notifier l'au moins un agent diffuseur de la mise à jour du flux d'actions parcourant le réseau domestique à l'aide d'une adresse de notification de l'au moins un agent diffuseur stockée dans une base de donnée locale, l'au moins un agent diffuseur étant agencé pour collecter le flux d'actions parcourant le réseau domestique afin de récupérer les informations sur la (les) dernière (s) action (s) à exécuter, suite à la réception de la notification de mise à jour ou sur sa propre initiative, pour interpréter l'identifiant électronique d'action associé à l'action sélectionnée assimilée au flux d'actions, éventuellement à l'aide d'une base de données locale de contenus comprenant un ensemble de définitions de contenus, pour exécuter l'action à un moment prédéterminé en diffusant des contenus d'information ciblée en fonction de l'identifiant électronique de l'action sélectionnée pour transmettre les identifiants cryptés d'évènement, d'action et de contenu en cas de transaction suite à l'exécution de l'action, les agents détecteur, sélectionneur et diffuseur exécutant des tâches dans des contextes d'exécution séparés sur des moyens de traitement de l'au moins un appareil électronique connecté au réseau domestique.

Cette disposition permet de combiner des informations en provenance de plusieurs appareils pour exécuter des actions personnalisées. Les agents sélectionneurs peuvent utiliser des évènements en provenance de plusieurs flux d'évènements produits par des agents détecteurs différents de façon asynchrone pour sélectionner les actions à exécuter et les agents diffuseurs peuvent également combiner des actions en provenance de plusieurs flux d'actions pour diffuser des contenus en les combinant à des contenus locaux.

Cette disposition permet également à tous les appareils « détecteurs », même sans capacité de diffusion, d'être utilisés pour sélectionner des contenus. Les agents détecteurs s'appuient sur les agents diffuseurs pour diffuser des contenus, sans nécessiter la présence d'un serveur central en charge de récupérer tous les évènements et d'initier toutes les actions, ce qui s'avère moins coûteux en ressources serveur. Cela réduit les prérequis en terme de capacité de traitement pour les agents détecteurs, et donc leur coût, et élimine le besoin d'avoir un système central de sélection et de diffusion de contenus en dehors du réseau de l'utilisateur.

De plus, cette disposition supprime la nécessité de disposer d'un appareil central dans le réseau domestique tel qu'un ordinateur, tablette ou ordiphone, qui devrait rester en permanence connecté au réseau domestique. Plusieurs appareils multifonctions peuvent être utilisés en tant qu' « agent sélectionneur », sans nécessiter de disposer de capacité de diffusion. Cela s'applique à des appareils « sans écran » toujours actifs tels que les passerelles internet (ADSL, fibre optique, câble) ou les compteurs électriques intelligents.

Selon un mode de réalisation, le réseau domestique peut être connecté à au moins un serveur distant par l'intermédiaire d'un réseau extérieur, tel le réseau Internet, et les données liées aux évènements identifiés aux actions sélectionnées et au contenus diffusés, sont stockées localement et sont communiquées en dehors du réseau domestique de façon anonyme et cryptée sur action de l'utilisateur du réseau domestique vers l'au moins un serveur distant.

Selon un mode de réalisation, les informations contenues dans les bases de données locales utilisées par un premier agent détecteur ou sélectionneur sont cryptées de façon à prévenir l'accès à ces informations par un deuxième agent sélectionneur ou diffuseur disposé en aval du premier agent dans un sens de communication des données par le flux d'évènement et/ou le flux d'action.

Selon un mode de réalisation, la base de données locale d'évènements et/ou d'actions et/ou de contenus reçoit (reçoivent) des mises à jour régulières depuis une ou plusieurs bases de données distantes respectivement d'évènements et/ou d'actions et/ou de contenus.

Selon un mode de réalisation, la ou les bases de données locales sont connectées en permanence à la ou aux bases de données distantes.

Selon un mode de réalisation, les bases de données distantes sont centralisées en une base de données distante unique.

Selon un mode de réalisation, les bases de données locales sont centralisées en une base de données unique.

Selon un mode de réalisation, une ou toutes les bases de données locales sont externes au réseau domestique.

Selon un mode de réalisation, les au moins un agent détecteur, sélectionneur et diffuseur se connectent automatiquement aux bases de données externalisées lors de la réception d'un évènement.

Selon un mode de réalisation, les évènements non identifiés par l'au moins un agent détecteur sont publiés dans un flux spécifique, en indiquant pour chaque évènement non identifié toutes les informations recueillies par l'au moins un agent détecteur.

Selon un mode de réalisation, le flux spécifique est publié sur autorisation de l'utilisateur de façon anonyme à intervalle régulier vers une base de données distante soit par l'agent détecteur, soit par l'agent sélectionneur.

Selon un mode de réalisation, l'agent diffuseur, tel un téléphone portable, est situé en dehors du réseau domestique mais accessible au travers un réseau public et mutualisé, tel un réseau GSM.

Selon un mode de réalisation, l'au moins un appareil électronique comprend un logiciel embarqué compatible permettant d'échanger avec au moins un deuxième appareil électronique.

Selon un mode de réalisation, le logiciel embarqué utilise des protocoles du type XML/IP basés sur les normes UPnP, XMPP, et Atom/RSS.

Cette disposition permet à l'au moins un appareil électronique de s'identifier dès sa connexion au réseau domestique et ainsi de disposer d'un système ouvert qui permet facilement d'ajouter ou d'enlever des agents de chaque type dans un même réseau de façon automatisée selon la procédure « Plug & Play ».

Selon un mode de réalisation, l'au moins un agent détecteur et l'au moins un agent sélectionneur comprennent chacun une mémoire cache respectivement pour les évènements détectés et les actions à exécuter.

Cette disposition permet de combiner à la fois l'exécution temps réel et asynchrone. Les agents qui ne seraient pas accessibles au moment où la notification est émise peuvent ainsi retrouver les derniers évènements et actions à leur propre initiative, par exemple lors de leur reconnexion au réseau.

Cette disposition permet également au système de fonctionner même lorsqu'aucune connexion à Internet n'est disponible et d'améliorer la réactivité du système. En particulier, cette mémoire cache peut être mise à jour à l'aide de technologies de type « broadcast » (TV, radio, satellite, câble) sans connexion à internet.

La présente invention a également pour objet un procédé de diffusion d'information ciblée pour un réseau domestique sur lequel est connecté au moins un appareil électronique comprenant des moyens de traitement, ledit procédé comportant dans cet ordre les étapes d'inventaire de l'au moins un appareil électronique lors de la première activation de l'au moins un appareil électronique et à chaque connexion/déconnexion de l'appareil électronique au réseau domestique, d'identification de l'au moins un appareil électronique connecté au réseau domestique, de détection d'un évènement et d'identification d'un évènement par au moins un agent détecteur consistant à collecter des informations générées par au moins un capteur matériel équipant le ou les appareils électroniques suite à la détection d'un évènement par l'au moins un capteur matériel, interpréter ces informations à l'aide d'une base de données locale d'évènements comprenant un ensemble de définitions d'évènements, associer à l'évènement une structure de donnée d'évènement identifié parmi l'ensemble de définitions d'évènements, chacune étant associé à un identifiant électronique unique d'évènement, et publier l'identifiant électronique d'évènement associé à l'évènement identifié dans un flux d'évènements parcourant le réseau domestique, notifier au moins un agent sélectionneur, de la mise à jour du flux d'évènements parcourant le réseau domestique à l'aide d'une adresse de notification de l'au moins un agent sélectionneur stockée dans une base de donnée locale, de sélection d'une action par un agent sélectionneur consistant à collecter le flux d'évènements parcourant le réseau domestique, interpréter l'identifiant électronique associé à l'évènement identifié assimilé au flux d'évènements à l'aide d'une base de données locale d'actions comprenant un ensemble de définitions d'actions, déduire la sélection d'une action de l'ensemble de définitions d'actions en fonction de l'identifiant électronique de l'évènement identifié, chacune étant associée à un identifiant électronique unique d'action et à l'aide d'une base de données locale d'actions contenant des règles de ciblage, et publier l'identifiant électronique associé à l'action sélectionnée dans un flux d'actions parcourant le réseau domestique, se connecter sur une base de données d'actions distante afin de mettre à jour la base de données locale d'actions au travers d'un flux de mise à jour, notifier l'au moins un agent diffuseur de la mise à jour du flux d'actions parcourant le réseau domestique à l'aide d'une adresse de notification de l'au moins un agent diffuseur stockée dans une base de donnée locale, de diffusion d'un contenu d'information ciblée à destination d'un utilisateur final par au moins un agent diffuseur consistant à collecter le flux d'actions parcourant le réseau domestique afin de récupérer les informations sur la (les) dernière (s) action (s) à exécuter, suite à la réception de la notification de mise à jour ou sur sa propre initiative, interpréter l'identifiant électronique d'action associé à l'action sélectionnée assimilée au flux d'actions, éventuellement à l'aide d'une base de données locale de contenus comprenant un ensemble de définitions de contenus, exécuter l'action à un moment prédéterminé en diffusant des contenus d'information ciblée en fonction de l'identifiant électronique de l'action sélectionnée.

Selon une variante de la mise en œuvre du procédé, l'étape de diffusion d'un contenu à destination d'un utilisateur final par au moins un agent diffuseur déclenche une requête vers l'au moins un agent sélectionneur afin qu'il mette à jour son ensemble de définitions d'actions depuis une ou plusieurs bases de données distantes, puis l'au moins un agent sélectionneur déclenche une requête à son tour vers l'au moins un détecteur afin qu'il mette à jour son ensemble de définition d'évènements depuis une ou plusieurs bases de données distantes.

Selon une variante de la mise en œuvre du procédé, l'étape de sélection d'une action par un agent sélectionneur déclenche une requête vers l'au moins un détecteur afin qu'il mette à jour son ensemble de définition d'évènements depuis une ou plusieurs bases de données distantes.

De toute façon, l'invention sera bien comprise à l'aide de la description qui suit, en référence au dessin schématique annexé représentant, à titre d'exemple non limitatif, un système de diffusion selon l'invention.
La figure 1 est un schéma synoptique d'un système de diffusion selon un mode de réalisation de l'invention.
La figure 2 est un schéma synoptique illustrant la mise en œuvre d'une étape dite d'inventaire du procédé de diffusion selon l'invention.
La figure 3 est un schéma synoptique illustrant la mise en œuvre d'une étape dite de détection et d'identification d'un évènement du procédé de diffusion selon l'invention.
La figure 4 est un schéma synoptique illustrant la mise en œuvre d'une étape dite de sélection d'une action du procédé de diffusion selon l'invention.
La figure 5 est un schéma synoptique illustrant la mise en œuvre d'une étape dite de diffusion d'un contenu à destination d'un utilisateur final du procédé de diffusion selon l'invention.
La figure 6 est un schéma synoptique illustrant une étape dite de transaction pouvant être mise en œuvre suite à la mise en œuvre du procédé de diffusion selon l'invention.
La figure 7 est un schéma synoptique d'une étape dite de réconciliation pouvant être mise en œuvre en parallèle du procédé de diffusion selon l'invention.

Des tableaux donnant des exemples d'informations échangées entre les différents éléments du système de diffusion selon l'invention sont donnés à la fin de la description.

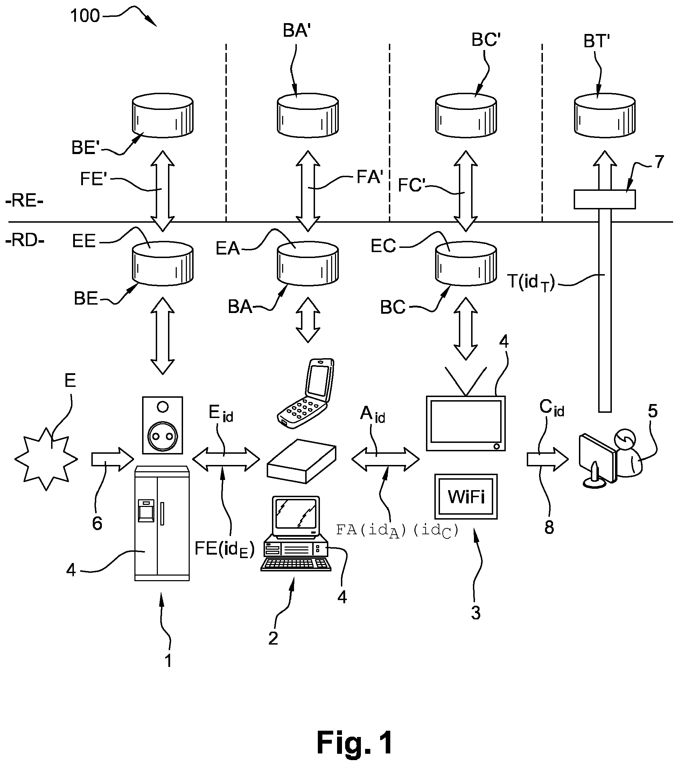

Comme illustré à la figure 1, le système 100 est basé sur l'utilisation de trois types d'agents localisés au sein d'un même réseau domestique RD.

Un agent détecteur 1 récupère des informations 6 détectées par des capteurs matériels (message de fonctionnement ; signal électrique, radio, lumineux, sonore)suite à un évènement E les interprète à l'aide d'une base locale d'évènements BE.

La base de données locale BE identifie une structure de donnée d'évènement identifié E_{id} parmi l'ensemble EE de définitions d'évènements.

Dans la suite de la description, la structure de données d'évènement identifié E_{id} sera désignée comme évènement identifié E_{id}.

L'agent détecteur 1 génère des identifiants électroniques id_{E} pour les évènements identifiés E_{id} et les publie dans un flux d'évènements FE.

Cet agent 1 stocke en outre les adresses de notification des agents sélectionneurs 2.

L'agent détecteur 1 peut recevoir des mises à jour régulières de la base d'évènements BE depuis une ou plusieurs bases distantes BE' au travers un flux de mise à jour FE'.

Il peut y avoir un ou plusieurs agents détecteurs à l'intérieur d'un même réseau domestique RD.

Le flux d'événements FE est reçu et analysé par un agent sélectionneur 2 qui en déduit les actions à exécuter A_{id} à l'aide d'une base de données locale d'actions BA contenant des règles de ciblage et les diffuse dans un flux d'actions FA.

La base de données locale d'actions BA est régulièrement mise à jour depuis une ou plusieurs bases distantes BA' au travers un flux de mise à jour FA'.

Les agents sélectionneurs 2 conservent la liste des adresses des flux d'évènements FE auxquels ils sont abonnés.

Ces agents 2 stockent en outre les adresses de notification des agents diffuseurs 3.

Il peut y avoir un ou plusieurs agents sélectionneurs 2 à l'intérieur d'un même réseau domestique RD.

Le flux d'actions FA est reçu et analysé par un agent diffuseur 3 qui exécute les actions A_{id} au moment voulu pour diffuser des contenus 8, éventuellement à l'aide d'une base de données locale de contenus BC.

Dans ce cas la base de données locale de contenus BC est mise à jour régulièrement depuis une ou plusieurs bases distantes BC' au travers un flux de mise à jour FC'.

Les agents diffuseurs 3 conservent la liste des adresses des flux d'actions FA auxquels ils sont abonnés.

Il peut y avoir un ou plusieurs agents diffuseurs 3 à l'intérieur d'un même réseau domestique RD.

Les contenus diffusés 8 peuvent éventuellement déclencher une ou plusieurs transactions T par l'utilisateur 5 depuis une simple demande d'informations jusqu'à un achat, qui permet de générer un revenu.

Chaque transaction T initiée est associée à un identifiant id_{T} formé à partir des identifiants des évènements id_{E} actions id_{A} et contenus idₒ ayant contribué au déclenchement de la transaction T.

Cet identifiant id_{T} est stocké par une base distante transactions BT' et est associé aux revenus provenant de la transaction initiée. Un agent de réconciliation est effectué a posteriori permettant de rémunérer les différentes parties.

Les trois agents (détecteur 1, sélectionneur 2, diffuseur 3) sont installés et opèrent à l'intérieur du réseau domestique RD de l'utilisateur 5, stockent localement les informations générées, effectuent les analyses à l'aide de bases locales BE, BA, BC, qui se mettent à jour régulièrement depuis des bases de données distantes BE', BA', BC'.

Les mises à jour sont effectuées de façon anonyme ; les informations récupérées au cours d'une transaction T sont également anonymes et cryptées de façon indépendante par chaque agent détecteur 1, sélectionneur 2 ou diffuseur 3.

Le procédé selon l'invention repose sur l'utilisation de ces agents détecteurs 1, sélectionneurs 2 ou diffuseurs 3 matérialisés par des appareils électroniques 4 compatibles qui communiquent via des protocoles prédéfinis, basés sur des protocoles internet standards utilisés habituellement pour la communication entre ordinateurs.

Plusieurs classes d'agents sont gérées, un agent pouvant être un équipement matériel dédié ou un logiciel installé sur un équipement multifonction comprenant tous deux des moyens de traitement de données.

Dans un mode de réalisation, chaque appareil électronique 4 est équipé d'un logiciel embarqué compatible permettant d'échanger avec les autres appareils électroniques 4 au moyen de protocoles de type XML/IP basés sur les normes UPnP et Atom/RSS.

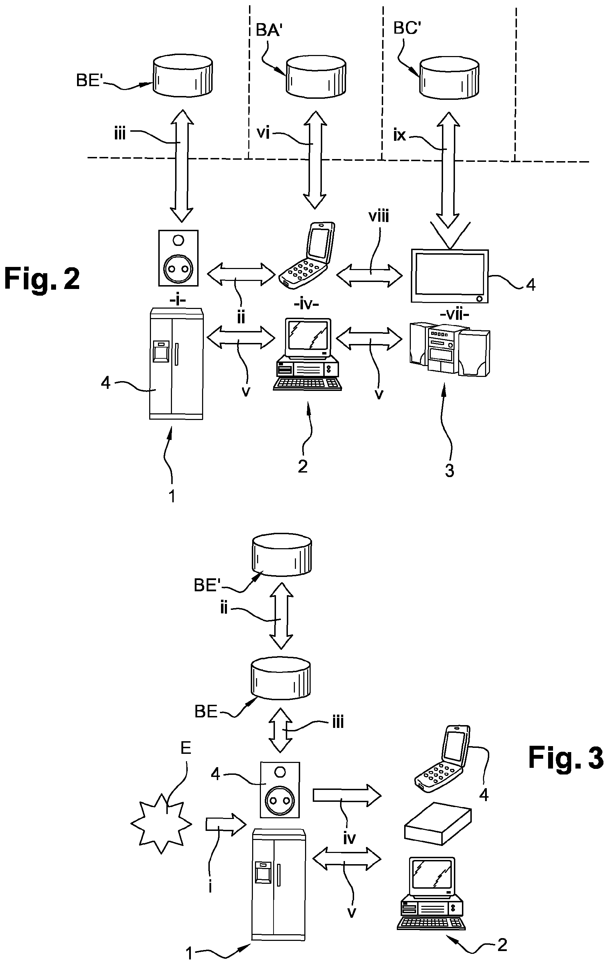

Une mise en œuvre d'une première étape du procédé selon l'invention illustrée à la figure 2 consistant en un inventaire de tous les appareils électroniques 4 connectés au réseau domestique RD, est exécutée lors de la première activation des appareils 4 et à chaque connexion ou déconnexion au réseau domestique RD.

Cette étape comprend plusieurs tâches d'exécution énumérées ci-dessous et repérées sur la figure 2.
(i) : Lors de chaque activation, l'agent détecteur 1 recense les interfaces physiques disponibles et les réseaux associés.
   Puis pour chaque réseau, l'agent détecteur 1 définit s'il s'agit d'un réseau privé (pouvant être utilisé pour diffuser un flux d'évènements FE, des notifications de mise à jour avec la connexion à la base de données distante d'évènements BE') ou public (ne pouvant être utilisé que pour la connexion à la base de données distante d'évènements BE').
   Ce choix est effectué automatiquement sur la base de règles et peut être modifié manuellement.
   Les règles invoquées peuvent être le type d'interface physique utilisé, la présence de mesures de sécurité de type cryptage ou encore l'utilisation d'un plan d'adressage particulier.
(ii) : Sur chaque réseau privé recensé l'agent détecteur 1 diffuse une notification en utilisant un protocole spécifique basé sur le protocole uPnP afin de se signaler aux autres agents, en indiquant son identifiant unique, sa classe, son type, les protocoles supportés, les types d'évènements détectables, l'adresse de publication où est publié son flux d'évènements FE et d'autres paramètres optionnels.
   Les agents sélectionneurs 2 présents sur le même réseau privé déterminent en fonction des informations fournies s'ils souhaitent s'abonner au flux d'évènements FE que l'agent détecteur 1 produit, en fonction de leurs capacités de traitement et d'autres paramètres. Le processus est initié à chaque reconnexion des agents au réseau domestique RD.
(iii) : Optionnellement, sur chaque réseau privé et public recensé, l'agent détecteur 1 tente de se connecter à une base de données distante d'évènements BE' au moyen d'un flux de mise à jour FE' prenant la forme d'une connexion de type http/IP afin de mettre à jour régulièrement sa base de données locale d'évènements BE.
   L'adresse de la base de données distante d'évènements BE' est pré stockée dans les paramètres de l'appareil 4 et plusieurs adresses peuvent être prédéfinies. Sur réponse de la base de données distante d'évènements BE', l'agent détecteur 1 fournit sa classe, son type et les protocoles supportés.
   Si la base de données distante d'évènements BE' ne peut répondre à la requête de l'agent détecteur 1 pour cause d'incompatibilité, elle fournit à l'agent détecteur 1 une autre adresse devant être utilisée.
   Si au contraire, la base de données distante d'évènements BE' répond à l'agent détecteur 1, elle indique les versions de protocole à utiliser, la ou les adresses de mise à jour, la fréquence de mise à jour et d'autres paramètres optionnels.
   Ces informations sont stockées par l'agent détecteur 1 et aucune information sur l'agent détecteur 1 n'est stockée par la base de données distante d'évènements BE'.
   Tous les échanges entre l'agent détecteur 1 et la base d'évènements BE' sont en outre cryptés afin d'empêcher l'interception des informations et utilisent un protocole d'échange de données de type XML/Atom.
(iv) : Optionnellement, si l'agent détecteur 1 dispose de fonctions permettant de recevoir des contenus multi-diffusés (TV, radio, satellite, câble), celui-ci se connecte sur un ou plusieurs canaux prédéfinis afin de recevoir régulièrement des mises à jour de la base locale d'évènements BE depuis la base distante BE'.
(v) : De la même façon, lors de chaque activation, l'agent sélectionneur 2 recense les interfaces physiques disponibles et les réseaux associés.
   Puis pour chaque réseau, l'agent sélectionneur 2 définit s'il s'agit d'un réseau privé (pouvant être utilisé pour recevoir des notifications d'évènements, diffuser des flux d'actions et pour la connexion à la base de données distante d'actions BA') ou public (ne peut être utilisé que pour la connexion à la base de données distante actions BA').
   Ce choix est effectué automatiquement sur la base de règles et peut être modifié manuellement.
   Les règles invoquées peuvent être le type d'interface physique utilisé, la présence de mesures de sécurité de type cryptage ou l'utilisation d'un plan d'adressage particulier.
(vi) : Sur chaque réseau privé recensé, l'agent sélectionneur 2 diffuse une notification en utilisant un protocole spécifique basé sur le protocole uPnP afin de se signaler aux autres agents, en indiquant un identifiant unique, la classe et le type d'agent, l'adresse du flux d'actions FA et l'adresse de notification où peuvent être notifiés les nouveaux évènements, les versions de protocoles supportés et d'autres paramètres optionnels.
   Chaque agent détecteur 1 présent stocke l'adresse de notification d'agent sélectionneur 2 dans une base locale (non illustrée) afin de pouvoir notifier celui-ci lors de la mise à jour du flux d'évènements FE.
   Les agents diffuseurs 3 présents sur le même réseau privé déterminent en fonction des informations fournies s'ils souhaitent s'abonner au flux d'actions FA de l'agent sélectionneur 2, en fonction de leurs capacités de traitement et d'autres paramètres.
   Le processus est initié à chaque reconnexion des agents sélectionneurs 2 au réseau domestique RD.
(vii) : Sur chaque réseau privé et public recensé, l'agent sélectionneur 2 tente de se connecter à une base de données d'actions distante BA' au moyen d'un flux de mise à jour FA' prenant la forme d'une connexion de type http/IP afin de mettre à jour régulièrement sa base de données locale d'actions BA.
   L'adresse de la base de données distante d'actions BA' est pré stockée dans les paramètres de l'appareil 4et plusieurs adresses peuvent être prédéfinies.
   Sur réponse de la base de données distante d'actions BA', l'agent sélectionneur 2 fournit sa classe, son type, les types d'évènements et d'actions supportés (en fonction des informations récupérées depuis les agents détecteurs 1 et diffuseurs 3) ainsi que les versions de protocole supportées.
   Si la base de données distante d'actions BA' ne peut répondre à la requête de l'agent sélectionneur 2 pour cause d'incompatibilité, elle fournit à l'agent sélectionneur 2 une autre adresse devant être utilisée.
   Si au contraire, la base de données distante d'actions BA' répond à l'agent sélectionneur 2, elle indique les versions de protocoles à utiliser, la ou les adresses de mise à jour, la fréquence de mise à jour et d'autres paramètres optionnels.
   Ces informations sont stockées par l'agent sélectionneur 2 ; aucune information sur l'agent sélectionneur 2 n'est stockée par la base de données distante d'actions BA'.
   En outre, tous les échanges entre l'agent sélectionneur 2 et la base d'actions BA' sont cryptés afin d'empêcher l'interception des informations et utilisent un protocole d'échange de données de type XML/Atom.
(viii) : Alternativement, si l'agent sélectionneur 2 dispose de fonctions permettant de recevoir des contenus multi-diffusés (TV, radio, satellite, câble), celui-ci se connecte sur un ou plusieurs canaux prédéfinis afin de recevoir régulièrement des mises à jour de la base de données locale d'actions BA depuis la base de données distante BA'.
(ix) : De la même façon, lors de chaque activation, l'agent diffuseur 3 recense les interfaces physiques disponibles et les réseaux associés. Puis pour chaque réseau, l'agent définit s'il s'agit d'un réseau privé (pouvant être utilisé pour recevoir des mises à jour du flux d'actions FA et pour la connexion à la base de données distante des contenus BC') ou public (ne pouvant être utilisé que pour la connexion à la base de données distante des contenus BC'). Ce choix est effectué automatiquement sur la base de règles et peut être modifié manuellement.
   Les règles invoquées peuvent être le type d'interface physique utilisé, la présence de mesures de sécurité de type cryptage, l'utilisation d'un plan d'adressage particulier.
(x) : Sur chaque réseau privé recensé, l'agent diffuseur 3 diffuse une notification en utilisant un protocole spécifique basé sur le protocole uPnP afin de se signaler aux autres agents, en indiquant un identifiant unique, la classe et le type d'agent, l'adresse de notification des actions, les versions de protocoles supportés, les types d'actions exécutables et d'autres paramètres optionnels.
   Chaque agent sélectionneur 2 présent stocke l'adresse de notification de l'agent diffuseur 3 dans une base locale (non illustrée) afin de pouvoir notifier celui-ci lors de la mise à jour du flux d'actions FA.
(xi) : Optionnellement, dans le cas où l'agent diffuseur 3 est en mesure de diffuser des contenus 8 à la demande, il est associé à une base de contenus BC utilisée pour sauvegarder des contenus retrouvés régulièrement depuis une ou plusieurs bases de données distantes de contenus BC' au moyen d'un flux de contenus FC' prenant la forme d'une connexion de type http/IP afin de mettre à jour régulièrement sa base de données locale de contenus BC.

L'adresse de la base de données distante de contenus BC' est pré stockée dans les paramètres de l'appareil 4 et plusieurs adresses peuvent être prédéfinies. Sur réponse de la base de données distante de contenus BC' l'agent diffuseur 3 fournit sa classe, son type et les protocoles supportés.

Si la base ne peut répondre à la requête de l'agent diffuseur 3 pour cause d'incompatibilité, elle fournit à l'agent diffuseur 3 une autre adresse devant être utilisée.

Si au contraire, la base de données distantes de contenus BC' répond à l'agent diffuseur 3, elle indique les versions de protocoles à utiliser, la ou les adresses de mise à jour, la fréquence de mise à jour et d'autres paramètres optionnels.

Ces informations sont stockées par l'agent diffuseur 3 et aucune information sur l'agent diffuseur 3 n'est stockée par la base de données distantes de contenus BC'.

Tous les échanges entre l'agent diffuseur 3 et la base de données distantes de contenus BC' sont en outre cryptés afin d'empêcher l'interception des informations et utilisent un protocole d'échange de données de type XML/Atom.

La figure 3 illustre une seconde étape du procédé selon l'invention dite de détection et d'interprétation.

Cette étape de détection et d'interprétation est exécutée lors de la détection d'un évènement E par un agent détecteur 1.

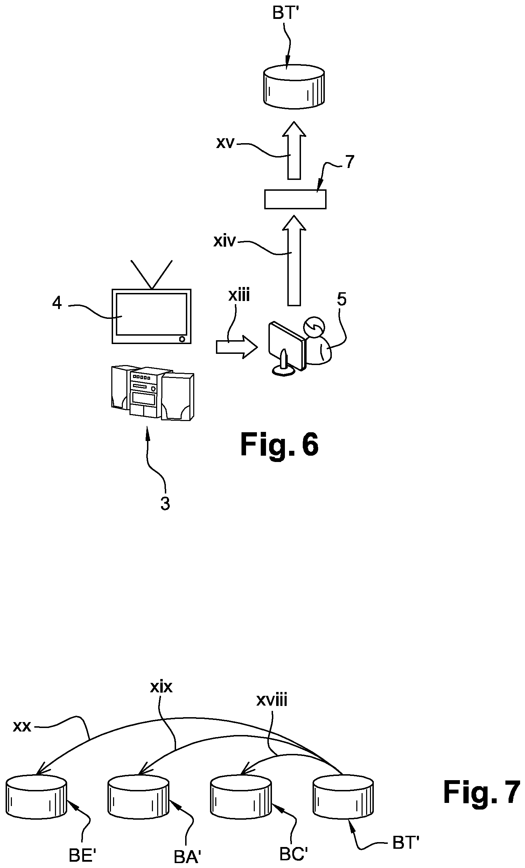

Cette étape comprend plusieurs tâches d'exécution énumérées ci-dessous et repérées sur la figure 3.
(i) : L'étape est déclenchée sur réception d'informations 6 en provenance de capteurs reliés à l'agent détecteur 1. Cette réception peut être initiée par un évènement déclencheur E ou sur initiative de l'agent détecteur 1 lui-même.
(ii) : L'agent détecteur 1 peut optionnellement se connecter à la base de données distante d'évènements BE', à l'aide d'un protocole de type Atom/RSS afin de mettre à jour sa base de données locale d'évènements BE de façon proactive. Aucune information sur l'agent détecteur 1 n'est conservée par la base de données distante BE'.
(iii) : Les informations récupérées, stockées sous forme de fichiers manipulables, sont analysées par l'agent détecteur 1 à l'aide de la base de données locale d'évènements BE afin de les traduire en un évènement identifié E_{id} compris dans un ensemble EE de définitions d'évènements selon une nomenclature prédéfinie.
(iv) : Une fois l'évènement identifié E_{id}, l'agent détecteur 1 met à jour le flux d'évènements FE en indiquant l'identifiant id_{E} et le type d'évènement plus des variables additionnelles.
   L'agent détecteur1 intègre certaines des données provenant des capteurs qui ont servi à l'identification de l'évènement E ainsi que son identifiant id_{E} de modèle (générique) ; ces informations sont cryptées à l'aide d'une clé fournie par la base de données distante d'évènements BE' et intégrées dans le flux d'évènements FE.
   Le flux d'évènements FE est stocké sous forme d'un fichier de type RSS/XML. L'agent détecteur1 notifie ensuite tous le(s) agent(s) sélectionneur(s) 2 préenregistrés de la mise à jour du flux d'évènements FE par une requête de type http/XML sur leur adresse de notification.
(v) : Suite à la réception de la notification de mise à jour, ou sur sa propre initiative, chaque agent sélectionneur 2 abonné se connecte au flux d'évènements FE via une requête du type http afin de récupérer les informations sur le(s) dernier(s) évènement(s) détecté(s) E_{id}.

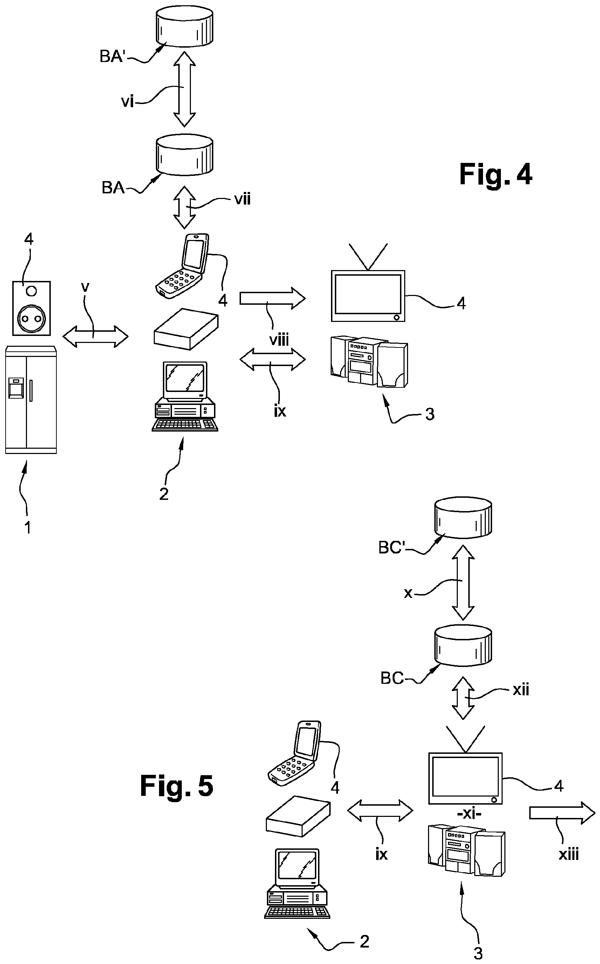

   La figure 4 illustre une troisième étape du procédé selon l'invention dite de diffusion.
   Cette étape est exécutée suite à la réception d'une notification de mise à jour d'un flux d'évènements FE par un agent sélectionneur 2.
   Cette étape comprend plusieurs tâches d'exécution énumérées ci-dessous et repérées sur la figure 4, certaines d'entre elles étant communes à des tâches d'exécution de l'étape précédente.
(v) : L'agent sélectionneur 2 se connecte au(x) flux d'évènements FE au(x)quel(s) il est abonné afin de récupérer les informations sur le(s) dernier(s) évènement(s) détecté(s) à l'aide d'une requête de type http. Les données lui sont retournées sous forme d'un fichier de type RSS/XML.
(vi) : Optionnellement, suite à la lecture d'un nouvel évènement E_{id} dans un flux d'évènements FE, l'agent sélectionneur 2 se connecte sur la base de données d'actions distante BA' afin de mettre à jour la base locale BA contenant les jeux de règles à l'aide d'une requête de type http(s).
(vii) : Les jeux de règles sont ensuite évalués par l'agent sélectionneur 2 en utilisant les variables fournies par l'agent détecteur 1 dans le flux d'évènements FE, les informations stockées par l'agent sélectionneur 2 et optionnellement des préférences utilisateurs.
   Chaque règle contient une liste de conditions que l'évènement E_{id} doit remplir et en regard un ensemble EA de définitions d'actions à exécuter. La règle peut s'appliquer à un ou plusieurs évènements E_{id} provenant d'un ou plusieurs agents détecteurs 1.
   Pour chaque action à exécuter sont également fournis un type ainsi que des variables qui seront déterminées par l'agent sélectionneur 2 sur la base des informations fournies dans le flux d'évènement FE ou des informations stockées localement (telles que les contenus ou les données personnels de l'utilisateur).
(viii) : Une fois la liste d'actions à exécuter déterminée, l'agent sélectionneur 2 marque le ou les évènements E_{id} comme « traités » et met à jour le flux d'actions FA.
   Pour chaque action, il intègre les identifiants id_{E} des évènements qui ont servi à la sélection de l'action A_{id} ainsi que son identifiant id_{A} de modèle (générique).
   Ces informations sont cryptées à l'aide d'une clé fournie par la base de données distante d'actions BA' utilisée. Le flux d'actions FA est stocké sous forme d'un fichier de type RSS/XML.
   L'agent sélectionneur 2 notifie ensuite tous les agents diffuseurs 3 préenregistrés de la mise à jour par une requête de type http/XML sur leur adresse de notification.
(ix) : Suite à la réception de la notification de mise à jour, ou sur sa propre initiative, chaque agent diffuseur 3 se connecte au flux d'actions FA via une requête http afin de récupérer les informations sur la(les) dernière(s) action(s) A_{id} à exécuter.
   La figure 5 illustre une quatrième étape du procédé selon l'invention dite de diffusion.
   Cette étape est exécutée suite à la réception d'une notification de mise à jour d'un flux d'actions FA par un agent diffuseur 3.
   Cette étape comprend plusieurs tâches d'exécution énumérées ci-dessous et repérées sur la figure 5, certaines d'entre elles étant communes à des tâches d'exécution de l'étape précédente.
(ix) : L'agent diffuseur 3 se connecte au(x) flux d'actions FA au(x)quel(s) il est abonné afin de récupérer les informations sur la (les) dernière (s) actions (s) à exécuter à l'aide d'une requête de type http. Les données lui sont retournées sous forme d'un fichier de type RSS/XML.
(x) : Optionnellement, l'agent diffuseur 3 peut se connecter sur une base de données distante de contenus BC' afin de mettre à jour la base de donnée locale BC à l'aide d'une requête de type http(s).
(xi) : Suite à la détection d'une ou plusieurs nouvelles actions A_{id} à exécuter, l'agent diffuseur 3 planifie son exécution.
   Il vérifie qu'une autre action A_{id} identique ou contradictoire n'est pas planifiée au même moment. Suivant les capacités de l'agent diffuseur 3, ces tâches sont effectuées à la réception des actions A_{id} ou lors de leur exécution.
(xii) : Optionnellement, l'agent diffuseur 3 peut se connecter sur une base de données de contenus locale BC afin d'y retrouver un contenu à utiliser pour l'exécution des actions A_{id}.
   L'identifiant id_{C} du contenu ou du flux à utiliser se trouve dans les variables associées à l'action A_{id} à exécuter transmises dans le flux d'actions FA.
(xiii) : A l'instant prévu l'agent diffuseur 3 effectue l'action A_{id} programmée avec ses paramètres.
   L'action A_{id} peut être de multiples types selon les capacités de l'agent diffuseur 3: sélection d'un canal particulier dans le cas d'un appareil 4 disposant de fonctions permettant de recevoir des contenus 8 multi-diffusés (TV, radio, satellite, câble), diffusion d'un contenu 8, affichage d'un dialogue avec l'utilisateur 5, exécution d'une application...
   Une fois l'action A_{id} exécutée, l'agent diffuseur 3 la marque comme traitée.
   Le procédé de diffusion d'information ciblée selon l'invention peut conduire à une étape supplémentaire de transaction T pour un service illustré à la figure 6.
   Cette étape est exécutée suite à l'exécution d'une action A_{id} par un agent diffuseur 3.
   Cette étape comprend plusieurs tâches d'exécution énumérées ci-dessous et repérées sur la figure 6.
(xiv) : Lors de l'exécution de l'action A_{id} par l'agent diffuseur 3, l'utilisateur 5 peut choisir de déclencher une transaction T sur un système transactionnel 7 externe (opéré par un tiers) et référencé dans les paramètres de l'action, par exemple un site web.
   L'adresse de ce système transactionnel 7 est associée au contenu diffusé 8, sous forme d'un lien hypertexte URL par exemple.
   Sur connexion, les informations sur l'action exécutée A_{id} sont également transmises au système transactionnel 7.
   Cela inclut les identifiants des contenus idc et d'actions id_{A} qui ont été utilisés ainsi que l'identifiant id_{E} de modèle (générique).Ces informations sont cryptées à l'aide d'une clé fournie par la base de contenus BC' utilisée.
   Le déclenchement de la transaction T peut également être enregistré comme évènement E afin d'être réutilisé par le système 100 pour sélectionner d'autres actions A_{id}.
(xv) : Le système transactionnel 7 transmet à la base de données distante de transactions BT' les détails de la transaction T ainsi que les données de l'action exécutée A_{id}.
(xvi) : La base de données distante de transactions BT' calcule à partir des éléments fournis le montant dû par le tiers opérant le système transactionnel 7 pour cette transaction T.
   Ce montant peut être un frais fixe par transaction T, un pourcentage du montant généré par la transaction T, etc.
(xvii) : La base de données distante de transactions BT' calcule à partir des identifiants des agents associés à la transaction T la part du revenu de la transaction T revenant à chaque protagoniste selon des règles prédéfinies.
   Enfin, le procédé de diffusion d'information ciblée selon l'invention peut conduire à une dernière étape supplémentaire dite de réconciliation illustrée à la figure 7.
   Cette étape est exécutée à intervalle régulier à l'initiative de la base de données distante de transactions BT'.
   Cette étape comprend plusieurs tâches d'exécution énumérées ci-dessous et repérées sur la figure 7.
(xviii) : La base de données distante de transactions BT' transmet à chaque base de données distante de contenus BC' identifiée (à l'aide des identifiants de base fournis dans chaque transaction T), un bilan récapitulant pour chaque type d'agent diffuseur 3 et chaque identifiant de contenu idc les revenus générés sur la période écoulée.
   Après avoir décrypté les informations à l'aide d'une clé propre, chaque base de données distante de transactions BT' utilise ces informations pour rémunérer les intermédiaires (ex : fournisseurs de contenus, fabricants ou opérateurs d'appareils de diffusion).
(xix) : La base de données distante de transactions BT' transmet à chaque base distante d'actions BA' identifiée (à l'aide des identifiants de base fournis dans chaque transaction T), un bilan récapitulant pour chaque type d'agent sélectionneur 2 et chaque identifiant d'action id_{A} les revenus générés sur la période écoulée.
   Après avoir décrypté les informations à l'aide d'une clé propre, chaque base de données distante de transactions BT' utilise ces informations pour rémunérer les intermédiaires (ex : fabricants ou opérateurs d'appareils sélectionneurs).
(xx) : La base de données distante transactions BT' transmet à chaque base de données distante d'évènements BE' (à l'aide des identifiants de base fournis dans chaque transaction T) un bilan récapitulant pour chaque type d'agent détecteur 1 et chaque identifiant d'évènements id_{E} les revenus générés sur la période écoulée.

Après avoir décrypté les informations à l'aide d'une clé propre, chaque base de données distante de transactions BT' utilise ces informations pour rémunérer les intermédiaires (ex : fabricants ou opérateurs d'appareils détecteurs).

Ainsi, l'intérêt principal du procédé lié à l'usage est la protection de la vie privée qui est assurée à plusieurs niveaux.

Les bases de données distantes ne stockent aucune information sur l'utilisateur 5 ou sur les appareils 4 utilisés, elles fonctionnent sur un mode « passif » et sont interrogées par les agents domestiques à intervalle régulier, sur le modèle des mises à jour de flux d'actualités sur Internet.

Les bases de données externes au réseau domestique RD ne connaissent pas l'identité des agents du réseau domestique RD, et ne peuvent déterminer quel(le) évènement E_{id}, action A_{id} ou contenu C_{id} a été réellement traité(e) lors d'une diffusion pour un utilisateur particulier 5.

Dans le cas d'appareils 4 disposant de fonctions de multidiffusion, les mises à jour sont téléchargées sans aucune connexion des agents locaux sur la base distante.

Toutes les données liées aux évènements identifiés E_{id} et aux actions exécutées A_{id} sont stockées localement et ne sont communiquées en dehors du réseau domestique RD qu'en cas de transaction T, sur action de l'utilisateur 5.

De plus, chaque agent aval ne peut avoir accès aux informations utilisées par un agent en amont, les informations étant cryptées.

L'agent détecteur 1 n'a pas accès aux données stockées de l'utilisateur 5 et peut uniquement utiliser les données provenant d'évènements E reçus pour l'identifier, à l'aide d'une base de données locale BE.

Les informations des capteurs transmises sont cryptées et ne peuvent être interprétées que par la base d'évènements BE' correspondante.

Les informations détaillées sur les évènements détectés E_{id} ainsi que l'historique ne sont pas transmis par l'agent sélectionneur 2.

Toutes les règles de sélection des actions A_{id} sont exécutées localement. Les informations sur les actions transmises sont cryptées et ne peuvent être interprétées que par la base d'actions BA' correspondante.

L'agent diffuseur 3 ne peut avoir accès aux données de l'évènement initial E qui ont conduit au choix de diffusion de l'information ciblée8 ni aux règles qui ont été utilisées pour sélectionner la diffusion d'informations ciblées 8, qui sont cryptées.

Les informations transmises en dehors du réseau domestique RD sont non nominatives et ne permettent pas de déterminer quel agent spécifique ou utilisateur 5 les a générées.

Elles sont agrégées par la base de données distante de transaction BT' et sont cryptées de façon à ne pouvoir être interprétées que par les bases correspondantes.

Bien que l'invention ait été décrite en liaison avec des exemples particuliers de réalisation et de mise en œuvre, il est bien évident qu'elle n'y est nullement limitée et qu'elle comprend tous les équivalents techniques des étapes et des moyens décrits.

Les informations suivantes sont fournies par l'agent 1 au(x) agent(s) sélectionneur(s) 2 à l'aide d'un fichier de type XML :

| **Information** | **Description** | **Exemple** |
|---|---|---|
| **Classe** | Agent détecteur | « détecteur » |
| **Protocole** | Version du protocole, incluant la nomenclature de types, d'évènements et d'actions | « version 1.0 » |
| **Type** | Type d'agent, définissant les capacités au sens large de l'agent. | « audio » |
| **Evènements** | Types d'évènements pouvant être détectés. | « son », « musique », « radio » |
| **Adresse du flux** | Adresse où le flux d'évènements est publié par l'agent détecteur | « http://192.168.1.22/eventFeed » |

Les informations suivantes peuvent être optionnellement fournies par l'agent détecteur 1 à la base d'évènements distante BE' afin de recevoir les mises à jour de la base locale d'évènements BE à l'aide d'un fichier de type XML :

| **Information** | **Description** | **Exemple** |
|---|---|---|
| **Classe** | Agent détecteur | « détecteur» |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « audio » |
| **Evènements** | Types d'évènements pouvant être détectés. | « son », « musique », « radio » |

Les informations suivantes sont retournées par la base d'événements distante BE' en fonction des types d'évènements pouvant être détectés à l'aide d'un fichier de type XML :

| **Information** | **Description** | **Exemple** |
|---|---|---|
| **Adresse 1** | Adresse où les mises à jour de la base locale d'évènements sont publiées | «https://update1.serveur.net/v ar1» |
| **Fréquence** | Fréquence de mise à jour | 1 heure |
| **Clés de cryptage** | Clés de cryptage à utiliser avec les informations fournies par la base d'évènements distante | {key} |
| **Id base** | Identifiant unique de la base locale d'évènements | event1 |
| **Adresse n** | Adresse où les mises à jour de la base locale d'évènements sont publiées | «https://updaten.serveur.net/v ar2» |
| **Fréquence** | Fréquence de mise à jour | 1 heure |
| **Clés de cryptage** | Clés de cryptage à utiliser avec les informations fournies par la base d'évènements distante | {key} |
| **Id base** | Identifiant unique de la base locale d'évènements | eventn |

Par la suite l'agent détecteur 1 met à jour régulièrement la base locale d'évènements BE en se connectant aux adresses fournies par la base distante BE' suivant les fréquences indiquées, à l'aide d'un protocole de type Atom/RSS. La base locale d'évènements BE peut également être mise à jour au cours du fonctionnement normal de l'agent détecteur 1.

Les informations suivantes sont fournies par l'agent sélectionneur 2 aux agents diffuseurs 3 à l'aide d'un fichier de type XML :

| **Information** | **Description** | **Exemple** |
|---|---|---|
| **Classe** | Agent sélectionneur | « sélectionneur » |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « polyvalent » |
| **Adresse du flux** | Adresse où le flux d'actions est publié par l'agent sélectionneur | « http:// 192.168.1.23/actionFeed » |

Les informations suivantes sont fournies par l'agent sélectionneur 2 aux agents détecteurs 1 afin de recevoir les notifications de mise à jour des flux d'évènements FE à l'aide d'un fichier de type XML :

| **Information** | **Description** | **Exemple** |
|---|---|---|
| **Classe** | Agent sélectionneur | « sélectionneur » |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « polyvalent » |
| **Adresse de notification** | Adresse où l'agent détecteur pourra notifier l'agent sélectionneur d'un nouvel évènement | «http://192.168.1.23/eventN otif» |

Les informations suivantes sont fournies par l'agent sélectionneur 2 à la base d'actions distante BA' afin de recevoir les mises à jour de la base locale d'actions BA à l'aide d'un fichier de type XML :

| **Information** | **Description** | **Exemple** |
|---|---|---|
| **Classe** | Agent sélectionneur | « sélectionneur » |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « polyvalent » |
| **Evènements** | Types d'évènements pouvant être détectés, sur la base des types supportés par flux d'évènements auxquels l'agent sélectionneur est abonné. | « son », « musique », « radio » |
| **Actions** | Types d'actions pouvant être exécutées, sur la base des types supportés par les agents diffuseurs qui sont abonnés au flux d'actions | « son » « vidéo » « TV » |

Les informations suivantes sont retournées par la base d'actions distante BA' en fonction des types d'évènements et d'actions supportés à l'aide d'un fichier de type XML :

| **Information** | **Description** | **Exemple** |
|---|---|---|
| **Adresse 1** | Adresse où les mises à jour de la base sont publiées | «https://update1.serveur.net/ var1» |
| **Fréquence** | Fréquence de mise à jour | 1 heure |
| **Clés de cryptage** | Clés de cryptage à utiliser avec les informations fournies par la base | {key} |
| **Id base** | Identifiant unique de la base d'actions | action1 |
| **Adresse n** | Adresse où les mises à jour de la base sont publiées | «https://updaten.serveur.net/ var2» |
| **Fréquence** | Fréquence de mise à jour | 1 heure |
| **Clés de cryptage** | Clés de cryptage à utiliser avec les informations fournies par la base | {key} |
| **Id base** | Identifiant unique de la base d'actions | actionn |

Par la suite l'agent sélectionneur 2 met à jour régulièrement la base locale d'actions BA en se connectant aux adresses fournies par la base distante BA' suivant les fréquences indiquées, à l'aide d'un protocole de type Atom/RSS.

Les informations suivantes sont fournies par l'agent diffuseur 3 aux agents sélectionneurs 2 afin de recevoir les notifications de mise à jour des flux d'actions FA à l'aide d'un fichier de type XML :

| **Information** | **Description** | **Exemple** |
|---|---|---|
| **Classe** | Agent diffuseur | « diffuseur » |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « vidéo » |
| **Actions** | Types d'actions pouvant être exécutées | « son » « vidéo » « TV » |
| **Adresse de notification** | Adresse où l'agent sélectionneur pourra notifier l'agent diffuseur d'une nouvelle action | « http://192.168.1.24/actionNot if » |

Les informations suivantes peuvent être optionnellement fournies par l'agent diffuseur 3 à la base de contenus distante BC' afin de recevoir les mises à jour de la base locale de contenus BC à l'aide d'un fichier de type XML :

| **Information** | **Description** | **Exemple** |
|---|---|---|
| **Classe** | Agent diffuseur | « diffuseur » |
| **Protocole** | Version du protocole, incluant la nomenclature de types, d'évènements et d'actions et les protocoles d'échange entre agents | « version 1.0 » |
| **Type** | Type de l'agent, définissant les capacités au sens large de l'agent. | « vidéo » |
| **Actions** | Types d'actions pouvant être exécutées | « son » « vidéo » « TV » |

Les informations suivantes sont retournées par la base de contenus distante BC' sur la base des informations fournies à l'aide d'un fichier de type XML :

| **Information** | **Description** | **Exemple** |
|---|---|---|
| **Adresse 1** | Adresse où les mises à jour de la base sont publiées | «https://update1.serveur.net/v ar1» |
| **Fréquence** | Fréquence de mise à jour | 1 heure |
| **Clés de cryptage** | Clés de cryptage à utiliser avec les informations fournies par la base | {key} |
| **Id base** | Identifiant unique de la base de contenus | content1 |
| **Adresse n** | Adresse où les mises à jour de la base sont publiées | «https://updaten.serveur.net/v ar2» |
| **Fréquence** | Fréquence de mise à jour | 1 heure |
| **Clés de cryptage** | Clés de cryptage à utiliser avec les informations fournies par la base | {key} |
| **Id base** | Identifiant unique de la base de contenus | contentn |

Les informations suivantes peuvent être renseignées par l'agent détecteur 1 pour chaque évènement inscrit dans le flux d'évènements FE ; le format du flux est de type XML/RSS.

| **Information** | **Description** | **Exemple** |
|---|---|---|
| **Protocole** | Version du protocole, incluant la nomenclature de types, d'évènements et d'actions et les protocoles d'échange entre agents | « version 1.0 » |
| **Horodateur** | Date et heure de l'évènement | « 2010-03-15 20 :05 :15 GMT » |
| **Evènement** | Type de l'évènement détecté | « device_on » |
| **Identifiant évènement** | Identifiant de l'évènement détecté, généré par la base d'évènements qui peut être interprété par l'agent sélectionneur | « XX-121-3338 » |
| **Variables évènement** | Variables associées à l'évènement | « heater », « 30 min», « priorité 1 » |
| **ID Agent détecteur (crypté)** | Modèle de l'agent détecteur, utilisé lors de la phase de réconciliation | « ba283ebd5467578484f3194e29 a7bcfb » |
| **Identifiants capteurs (cryptés)** | Informations ayant servi à détecter l'évènement, cryptées par l'agent détecteur à l'aide de la clé de la base d'évènements ayant fourni les règles d'identification utilisées. | « ba283ebd5467578484f3194e29 a7bcfb » |
| **Id base** | Identifiant de la base d'évènements utilisée | event1 |

Les informations suivantes peuvent être fournies par l'agent sélectionneur 2 aux agents diffuseurs 3 pour chaque action indiquée dans le flux d'actions FA ; le format du flux est de type XML/RSS.

| **Information** | **Description** | **Exemple** |
|---|---|---|
| **Protocole** | Version du protocole, incluant la nomenclature de types, d'évènements et d'actions et les protocoles d'échange entre agents | « version 1.0 » |
| **Horodateur** | Date et heure de création de l'action | « 2010-03-15 20 :05 :15 GMT » |
| **Action** | Type de l'action à exécuter | « playvideo » |
| **Identifiant action** | Identifiant de l'action à exécuter généré par la base d'actions, qui peut être interprété par l'agent diffuseur | « REET-TTR21» |
| **Variables action** | Variables associées à l'action, y compris date d'exécution, priorité, scénario en cas d'erreur, adresse de l'agent transactionnel associé. | « 12 », « 20h35 », « Priorité 1 » |
| **ID Agent sélectionneur (crypté)** | Modèle de l'agent sélectionneur, utilisé lors la phase de réconciliation | « ba283ebd5467578484f3194e29 a7bcfb » |
| **Evènements (cryptés)** | Type de ou des évènement(s) détecté(s) ayant permis de déclencher l'action | « ba283ebd5467578484f3194e29 a7bcfb » |
| **Identifiant évènements (cryptés)** | Identifiant de ou des évènement(s) détectés ayant permis de déclencher l'action | « ba283ebd5467578484f3194e29 a7bcfb » |
| **Id base** | Identifiant de la base d'actions utilisée | action1 |
| **ID Agent(s) détecteur(s) (cryptés)** | Modèle du ou des agent(s)détecteur(s) ayant permis de déclencher l'action, utilisé lors la phase de réconciliation | « ba283ebd5467578484f3194e29 a7bcfb » |
| **Identifiants capteurs (cryptés)** | Informations ayant servi à détecter l'évènement | « ba283ebd5467578484f3194e29 a7bcfb » |
| **Id base** | Identifiant de la base d'évènements utilisée | event1 |

Les informations suivantes sont fournies au système transactionnel 7 par l'agent diffuseur 3 en tant que variables associées à la demande de l'utilisateur :

| **Information** | **Description** | **Exemple** |
|---|---|---|
| **ID Agent diffuseur (crypté)** | Modèle de l'agent diffuseur ayant exécuté l'action qui a permis le déclenchement de la transaction | « ba283ebd5467578484f3194e29 a7bcfb » |
| **Contenu (crypté)** | Type du contenu diffusé | « ba283ebd5467578484f3194e29 a7bcfb » |
| **Identifiant contenu (crypté)** | Identifiant du contenu diffusé généré par la base de contenu (optionnel) | « ba283ebd5467578484f3194e29 a7bcfb » |
| **Action (crypté)** | Type de l'action exécutée qui a permis la transaction | « ba283ebd5467578484f3194e29 a7bcfb » |
| **Identifiant action (crypté)** | Identifiant de l'action exécutée | « ba283ebd5467578484f3194e29 a7bcfb » |
| **Id base** | Identifiant de la base de contenus utilisée | content1 |
| **ID Agent sélectionneur (crypté)** | Modèle du ou des agents sélectionneurs ayant permis de sélectionner l'action | « ba283ebd5467578484f3194e29 a7bcfb » |
| **Evènement (crypté)** | Type du ou des évènements détectés qui ont permis de déclencher l'action | « ba283ebd5467578484f3194e29 a7bcfb » |
| **Identifiant évènement (crypté)** | Identifiant de l'évènement détecté ayant permis de déclencher l'action | « ba283ebd5467578484f3194e29 a7bcfb » |
| **Id base** | Identifiant de la base d'actions BA utilisée | action1 |
| **ID Agent détecteur (crypté)** | Modèle du ou des agents détecteurs ayant permis de déclencher l'action | « ba283ebd5467578484f3194e29 a7bcfb » |
| **Identifiants capteurs (cryptés)** | Informations ayant servi à détecter l'évènement | « ba283ebd5467578484f3194e29 a7bcfb » |
| **Id base** | Identifiant de la base d'évènements utilisée | event1 |

Les informations suivantes sont fournies par l'agent transactionnel (1, 2 ou 3) à la base distante transactions BT' pour chaque transaction T effectuée sous format XML :

| **Information** | **Description** | **Exemple** |
|---|---|---|
| **Horodateur** | Date et heure de la transaction | « 2010-03-15 20 :05 :15 GMT » |
| **Identifiant système transactionnel** | Identifiant de l'agent transactionnel ayant effectué la transaction | « 123 régie » |
| **Identifiant transaction** | Identifiant unique transaction | « XX-7448-22222 » |
| **Détails transaction** | Détails transaction, permettant de calculer le revenu généré | CPC - 0.6€ |
| **ID Agent diffuseur (crypté)** | Modèle de l'agent diffuseur ayant exécuté l'action qui a permis le déclenchement de la transaction | « ba283ebd5467578484f3194e29 a7bcfb » |
| **Contenu (crypté)** | Type du contenu diffusé | « ba283ebd5467578484f3194e29 a7bcfb » |
| **Identifiant contenu (crypté)** | Identifiant du contenu diffusé généré par la base de contenu (optionnel) | « ba283ebd5467578484f3194e29 a7bcfb » |
| **Action (crypté)** | Type de l'action exécutée qui a permis la transaction | « ba283ebd5467578484f3194e29 a7bcfb » |
| **Identifiant action (crypté)** | Identifiant de l'action exécutée | « ba283ebd5467578484f3194e29 a7bcfb » |
| **Id base** | Identifiant de la base de contenus utilisée | content1 |
| **ID Agent sélectionneur (crypté)** | Modèle du ou des agents sélectionneurs ayant permis de sélectionner l'action | « ba283ebd5467578484f3194e29 a7bcfb » |
| **Evènement (crypté)** | Type du ou des évènements détectés qui ont permis de déclencher l'action | « ba283ebd5467578484f3194e29 a7bcfb » |
| **Identifiant évènement (crypté)** | Identifiant de l'évènement détecté ayant permis de déclencher l'action | « ba283ebd5467578484f3194e29 a7bcfb » |
| **Id base** | Identifiant de la base d'actions utilisée | action1 |
| **ID Agent détecteur (crypté)** | Modèle du ou des agents détecteurs ayant permis de déclencher l'action | « ba283ebd5467578484f3194e29 a7bcfb » |
| **Identifiants capteurs (cryptés)** | Informations ayant servi à détecter l'évènement | « ba283ebd5467578484f3194e29 a7bcfb » |
| **Id base** | Identifiant de la base d'évènements utilisée | event1 |

## Revendications

1. Système de diffusion (100) d'information ciblée pour un réseau domestique (RD) sur lequel est connecté au moins un appareil électronique (4) comprenant des moyens de traitement, ledit système de diffusion comprenant :
- au moins un agent détecteur (1) d'un évènement prédéfini (E_{id}), l'au moins un agent détecteur (1) étant disposé sur l'au moins un appareil électronique (4) ;
- au moins un agent sélectionneur (2) d'une action (A_{id}) à réaliser, l'au moins un agent sélectionneur (2) étant disposé sur l'au moins un appareil électronique (4) ; et
- au moins un agent diffuseur (3) d'un contenu d'information ciblée (C_{id}) à destination d'un utilisateur final (5), l'au moins un agent diffuseur (3) étant disposé sur l'au moins un appareil électronique (4) ;
L'au moins un agent détecteur étant agencé:
pour collecter des informations (6) générées par au moins un capteur matériel équipant le ou les appareils électroniques suite à la détection d'un évènement (E) par l'au moins un capteur matériel,
pour interpréter ces informations (6) à l'aide d'une base de données locale d'évènements (BE) comprenant un ensemble (EE) de définitions d'évènements,
pour associer à l'évènement (E) une structure de donnée d'évènement identifié (E_{id}) parmi l'ensemble (EE) de définitions d'évènements, chacune étant associé à un identifiant électronique unique d'évènement (id_{E}), et
pour publier l'identifiant électronique d'évènement (id_{E}) associé à l'évènement identifié (E_{id}) dans un flux d'évènements (FE) parcourant le réseau domestique (RD),
pour notifier l'au moins un agent sélectionneur (2) de la mise à jour du flux d'évènements (FE) parcourant le réseau domestique (RD) à l'aide d'une adresse de notification de l'au moins un agent sélectionneur (2) stockée dans une base de donnée locale,
- l'au moins un agent sélectionneur (2) étant agencé :
pour collecter le flux d'évènements (FE) parcourant le réseau domestique (RD),
pour interpréter l'identifiant électronique (id_{E}) associé à l'évènement identifié (E_{id}) assimilé au flux d'évènements (FE) à l'aide d'une base de données locale d'actions (BA) comprenant un ensemble (EA) de définitions d'actions,
pour en déduire la sélection d'une action (A_{id}) de l'ensemble (EA) de définitions d'actions en fonction de l'identifiant électronique (id_{E}) de l'évènement identifié (E_{id}), chacune étant associée à un identifiant électronique unique d'action (id_{A}) et à l'aide d'une base de données locale d'actions (BA) contenant des règles de ciblage, et
pour publier l'identifiant électronique (id_{A}) associé à l'action sélectionnée (A_{id}) dans un flux d'actions (FA) parcourant le réseau domestique (RD),
pour se connecter sur une base de données d'actions distante (BA') afin de mettre à jour la base de données locale d'actions (BA) au travers d'un flux de mise à jour (FA'),
pour notifier l'au moins un agent diffuseur (3) de la mise à jour du flux d'actions (FA) parcourant le réseau domestique (RD) à l'aide d'une adresse de notification de l'au moins un agent diffuseur (3) stockée dans une base de donnée locale,
- l'au moins un agent diffuseur (3) étant agencé :
pour collecter le flux d'actions (FA) parcourant le réseau domestique (RD) afin de récupérer les informations sur la (les) dernière (s) action (s) (A_{id}) à exécuter, suite à la réception de la notification de mise à jour ou sur sa propre initiative,
pour interpréter l'identifiant électronique d'action (id_{A}) associé à l'action sélectionnée (A_{id}) assimilée au flux d'actions (FA), éventuellement à l'aide d'une base de données locale de contenus (BC) comprenant un ensemble (EC) de définitions de contenus,
pour exécuter l'action à un moment prédéterminé en diffusant des contenus d'information ciblée (C_{id}) en fonction de l'identifiant électronique (id_{A}) de l'action sélectionnée (A_{id}),
pour transmettre les identifiants cryptés d'évènement (idE), d'action (idA) et de contenu (idC) en cas de transaction T suite à l'exécution de l'action (A_{id}),
les agents détecteur (1), sélectionneur (2) et diffuseur (3) exécutant des tâches dans des contextes d'exécution séparés sur des moyens de traitement de l'au moins un appareil électronique (4) connecté au réseau domestique (RD).

2. Système de diffusion (100) selon la revendication 1 dans lequel le réseau domestique (RD) peut être connecté à au moins un serveur distant par l'intermédiaire d'un réseau extérieur (RE), tel le réseau Internet, et les données liées aux évènements identifiés (E_{id}) aux actions sélectionnées (A_{id}) et aux contenus diffusés (Cid) sont stockées localement et sont communiquées en dehors du réseau domestique de façon anonyme et cryptée sur action de l'utilisateur (5) du réseau domestique (RD) vers l'au moins un serveur distant.

3. Système de diffusion (100) selon l'une des revendications 1 à 2, dans lequel les informations contenues dans les bases de données locales utilisées par un premier agent détecteur ou sélectionneur sont cryptées de façon à prévenir l'accès à ces informations par un deuxième agent sélectionneur ou diffuseur disposé en aval du premier agent dans un sens de communication des données par le flux d'évènement et/ou le flux d'action.

4. Système de diffusion (100) selon l'une des revendications 1 à 3 dans lequel la base de données locale d'évènements (BE) et/ou d'actions (BA) et/ou de contenus (BC) reçoit (reçoivent) des mises à jour régulières depuis une ou plusieurs bases de données distantes respectivement d'évènements (BE') et/ou d'actions (BA') et/ou de contenus (BC').

5. Système de diffusion (100) selon la revendication 4 dans lequel la ou les bases de données locales (BE, BA, BC) sont connectées en permanence à la ou aux bases de données distantes (BE', BA', BC').

6. Système de diffusion (100) selon l'une des revendications 1 à 5 dans lequel une ou toutes les bases de données locales (BE, BA, BC) sont externes au réseau domestique.

7. Système de diffusion (100) selon la revendication 6 dans lequel les au moins un agent détecteur (1), sélectionneur (2) et diffuseur (3) se connectent automatiquement aux bases de données externalisées (BE, BA, BC) lors de la réception d'un évènement (E).

8. Système de diffusion (100) selon l'une des revendications 1 à 7 dans lequel les évènements (E) non identifiés par l'au moins un agent détecteur (1) sont publiés dans un flux spécifique (FE'), en indiquant pour chaque évènement (E) non identifié toutes les informations recueillies par l'au moins un agent détecteur (1).

9. Système de diffusion (100) selon la revendication 8 dans lequel le flux spécifique (FE')est publié sur autorisation de l'utilisateur (5) de façon anonyme à intervalle régulier vers une base de données distante soit par l'agent détecteur (1), soit par l'agent sélectionneur (2).

10. Système de diffusion (100) selon l'une des revendications 1 à 9 dans lequel l'agent diffuseur (3), tel un téléphone portable, est situé en dehors du réseau domestique (RD) mais accessible au travers un réseau public et mutualisé, tel un réseau GSM.

11. Système de diffusion (100) selon l'une des revendications 1 à 10 dans lequel l'au moins un agent détecteur (1) et l'au moins un agent sélectionneur (2) comprennent chacun une mémoire cache respectivement pour les évènements détectés (E_{id}) et les actions à exécuter (A_{id}).

12. Procédé de diffusion d'information ciblée pour un réseau domestique (RD) sur lequel est connecté au moins un appareil électronique (4) comprenant des moyens de traitement, ledit procédé comportant dans cet ordre les étapes :
- d'inventaire de l'au moins un appareil électronique (4) lors de la première activation de l'au moins un appareil électronique (4) et à chaque connexion/déconnexion de l'appareil électronique (4) au réseau domestique (RD),
- d'identification de l'au moins un appareil électronique (4) connecté au réseau domestique (RD),
- de détection d'un évènement (E) et d'identification d'un évènement (E_{id}) par au moins un agent détecteur (1) consistant à :
collecter des informations (6) générées par au moins un capteur matériel équipant le ou les appareils électroniques suite à la détection d'un évènement (E) par l'au moins un capteur matériel,
interpréter ces informations (6) à l'aide d'une base de données locale d'évènements (BE) comprenant un ensemble (EE) de définitions d'évènements,
associer à l'évènement (E) une structure de donnée d'évènement identifié (E_{id}) parmi l'ensemble (EE) de définitions d'évènements, chacune étant associé à un identifiant électronique unique d'évènement (id_{E}), et
publier l'identifiant électronique d'évènement (id_{E}) associé à l'évènement identifié (E_{id}) dans un flux d'évènements (FE) parcourant le réseau domestique (RD),
notifier au moins un agent sélectionneur (2), de la mise à jour du flux d'évènements (FE) parcourant le réseau domestique (RD) à l'aide d'une adresse de notification de l'au moins un agent sélectionneur (2) stockée dans une base de donnée locale,
- de sélection d'une action (A_{id}) par un agent sélectionneur (2) consistant à :
collecter le flux d'évènements (FE) parcourant le réseau domestique (RD),
interpréter l'identifiant électronique (id_{E}) associé à l'évènement identifié (E_{id}) assimilé au flux d'évènements (FE) à l'aide d'une base de données locale d'actions (BA) comprenant un ensemble (EA) de définitions d'actions,
déduire la sélection d'une action (A_{id}) de l'ensemble (EA) de définitions d'actions en fonction de l'identifiant électronique (id_{E}) de l'évènement identifié (E_{id}), chacune étant associée à un identifiant électronique unique d'action (id_{A}) et à l'aide d'une base de données locale d'actions (BA) contenant des règles de ciblage, et
publier l'identifiant électronique (id_{A}) associé à l'action sélectionnée (A_{id}) dans un flux d'actions (FA) parcourant le réseau domestique (RD),
se connecter sur une base de données d'actions distante (BA') afin de mettre à jour la base de données locale d'actions (BA) au travers d'un flux de mise à jour (FA'),
notifier l'au moins un agent diffuseur (3) de la mise à jour du flux d'actions (FA) parcourant le réseau domestique (RD) à l'aide d'une adresse de notification de l'au moins un agent diffuseur (3) stockée dans une base de donnée locale,
- de diffusion d'un contenu d'information ciblée (C_{id}) à destination d'un utilisateur final (5) par au moins un agent diffuseur (3) consistant à :
collecter le flux d'actions (FA) parcourant le réseau domestique (RD) afin de récupérer les informations sur la (les) dernière (s) action (s) (A_{id}) à exécuter, suite à la réception de la notification de mise à jour ou sur sa propre initiative,
interpréter l'identifiant électronique d'action (id_{A}) associé à l'action sélectionnée (A_{id}) assimilée au flux d'actions (FA), éventuellement à l'aide d'une base de données locale de contenus (BC) comprenant un ensemble (EC) de définitions de contenus,
exécuter l'action (A_{id}) à un moment prédéterminé en diffusant des contenus d'information ciblée (C_{id}) en fonction de l'identifiant électronique (id_{A}) de l'action sélectionnée (A_{id}).

13. Procédé de diffusion selon la revendication 12 dans lequel l'étape de diffusion d'un contenu (C_{id}) à destination d'un utilisateur final (5) par au moins un agent diffuseur (3) déclenche une requête vers l'au moins un agent sélectionneur (2) afin qu'il mette à jour son ensemble de définitions d'actions (EA) depuis une ou plusieurs bases de données distantes (BA'), puis l'au moins un agent sélectionneur (2) déclenche une requête à son tour vers l'au moins un détecteur (1) afin qu'il mette à jour son ensemble de définition d'évènements (EE) depuis une ou plusieurs bases de données distantes (BE').

14. Procédé de diffusion selon la revendication 12 dans lequel l'étape de sélection d'une action (A_{id}) par un agent sélectionneur (2) déclenche une requête vers l'au moins un détecteur (1) afin qu'il mette à jour son ensemble de définition d'évènements (EE) depuis une ou plusieurs bases de données distantes (BE').

## Patentansprüche

1. System zur Sendung (100) einer gezielten Information für ein Heimnetzwerk (RD), mit dem mindestens ein elektronisches Gerät (4) verbunden ist, das Bearbeitungsmittel umfasst, wobei das System zur Sendung Folgendes umfasst:
- mindestens ein Ermittlungsmittel (1) für ein vordefiniertes Ereignis (E_{id}), wobei das mindestens eine Ermittlungsmittel (1) auf dem mindestens einen elektronischen Gerät (4) angeordnet ist;
- mindestens ein Wahlmittel (2) für eine durchzuführende Aktion(A_{id}), wobei das mindestens eine Wahlmittel (2) auf dem mindestens einen elektronischen Gerät (4) angeordnet ist; und
- mindestens ein Sendemittel (3) für einen Inhalt einer gezielten Information (C_{id}), zu einem Endnutzer (5), wobei das mindestens eine Sendemittel (3) auf dem mindestens einen elektronischen Gerät (4) angeordnet ist;
wobei das mindestens eine Ermittlungsmittel eingerichtet ist:
zum Sammeln von Informationen (6), die durch mindestens einen Hardware-Sensor generiert werden, mit dem das oder die elektronischen Geräte ausgerüstet sind, nach dem Ermitteln eines Ereignisses (E) durch den mindestens einen Hardware-Sensor,
zum Interpretieren dieser Informationen (6) mithilfe einer lokalen Ereignis-Datenbank (BE), umfassend eine Gesamtheit (EE) an Ereignisdefinitionen,
zum Zuweisen zu dem Ereignis (E) einer Datenstruktur eines identifizierten Ereignisses (E_{id}) aus der Gesamtheit (EE) an Ereignisdefinitionen, wobei jede einer eindeutigen elektronischen Ereigniskennung (id_{E}) zugewiesen wird, und
zum Veröffentlichen der elektronischen Ereigniskennung (id_{E}), die dem identifizierten Ereignis (E_{id}) in einem Ereignisfluss (FE) zugewiesen ist, der das Heimnetzwerk (RD) durchläuft,
zum Benachrichtigen des mindestens einen Wahlmittels (2) über die Aktualisierung des Ereignisflusses (FE), der das Heimnetzwerk (RD) durchläuft, mithilfe einer Benachrichtigungsadresse des mindestens einen Wahlmittels (2), die in einer lokalen Datenbank abgelegt ist,
- wobei das mindestens eine Wahlmittel (2) eingerichtet ist:
zum Sammeln des Ereignisflusses (FE), der das Heimnetzwerk (RD) durchläuft,
zum Interpretieren der elektronischen Kennung (id_{E}), die dem identifizierten Ereignis (E_{id}) zugewiesen ist, das dem Ereignisfluss (FE) gleichgestellt ist, mithilfe einer lokalen Aktionsdatenbank (BA), die eine Gesamtheit (EA) en Aktionsdefinitionen umfasst,
um daraus die Auswahl einer Aktion (A_{id}) aus der Gesamtheit (EA) an Aktionsdefinitionen in Abhängigkeit von der elektronischen Kennung (id_{E}) des identifizierten Ereignisses (E_{id}) abzuleiten, wobei jede einer eindeutigen elektronischen Aktionskennung (id_{A}) zugewiesen ist, und mithilfe einer lokalen Aktionsdatenbank (BA), die Regeln zum Abzielen enthält, und
zum Veröffentlichen der elektronischen Kennung (id_{A}), die der ausgewählten Aktion (A_{id}) in einem Ereignisfluss (FA) zugewiesen ist, der das Heimnetzwerk (RD) durchläuft,
um sich mit einer entfernten Aktionsdatenbank (BA') zu verbinden, um die lokale Aktionsdatenbank (BA) anhand eines Aktualisierungsflusses (FA') zu aktualisieren,
zum Benachrichtigen des mindestens einen Sendemittels (3) über die Aktualisierung des Aktionsflusses (FA), der das Heimnetzwerk (RD) durchläuft, mithilfe einer Benachrichtigungsadresse des mindestens einen Sendemittels (3), die in einer lokalen Datenbank abgelegt ist,
- wobei das mindestens eine Sendemittel (3) eingerichtet ist:
zum Sammeln des Aktionsflusses (FA), der das Heimnetzwerk (RD) durchläuft, um die Informationen über die letzte(n) auszuführende(n) Aktion(en) (A_{id}) nach dem Empfangen der Aktualisierungsbenachrichtigung oder auf dessen eigene Initiative zu erheben,
zum Interpretieren der elektronischen Aktionskennung (id_{A}), die der ausgewählten Aktion (A_{id}) zugewiesen ist, die dem Aktionsfluss (FA) gleichgestellt ist, eventuell mithilfe einer lokalen Datenbank an Inhalten (BC), die eine Gesamtheit (EC) an Inhaltsdefinitionen umfasst,
zum Ausführen der Aktion zu einem vorbestimmten Zeitpunkt durch Senden der Inhalte einer gezielten Information (C_{id}) in Abhängigkeit von der elektronischen Kennung (id_{A}) der ausgewählten Aktion (A_{id}),
zum Übertragen der verschlüsselten Ereignis- (idE), Aktions- (idA), und Inhaltskennungen (idC) im Falle einer Transaktion T infolge der Ausführung der Aktion (A_{id}),
wobei die Ermittlungs- (1), Wahl- (2) und Sendemittel (3) Aufgaben in getrennten Ausführungskontexten in Bearbeitungsmitteln des mindestens einen elektronischen Gerätes (4) ausführen, das mit dem Heimnetzwerk (RD) verbunden ist.

2. System zur Sendung (100) nach Anspruch 1, wobei das Heimnetzwerk (RD) anhand eines externen Netzwerks (RE), wie des Internet-Netzwerks, mit mindestens einem entfernten Server verbunden werden kann, und die Daten in Verbindung mit den identifizierten Ereignissen (E_{id}), den ausgewählten Aktionen (A_{id}) und den gesendeten Inhalten (C_{id}) lokal abgelegt sind, und durch Aktion des Nutzers (5) des Heimnetzwerks (RD) außerhalb des Heimnetzwerks anonym und verschlüsselt zu mindestens einem entfernten Server kommuniziert werden.

3. System zur Sendung (100) nach einem der Ansprüche 1 bis 2, wobei die in den lokalen Datenbanken enthaltenen Informationen, die von einem ersten Ermittlungs- oder Wahlmittel verwendet werden, verschlüsselt sind, um den Zugriff auf diese Informationen durch ein zweites Ermittlungs- oder Wahlmittel, das stromabwärts des ersten Mittels in einer Kommunikationsrichtung der Daten angeordnet ist, durch den Ereignisfluss und/oder den Aktionsfluss zu verhindern.

4. System zur Sendung (100) nach einem der Ansprüche 1 bis 3, wobei die lokale Ereignis- (BE) und/oder Aktions- (BA) und/oder Inhaltsdatenbank (BC) regelmäßige Aktualisierungen von einer oder mehreren entfernten jeweils Ereignis- (BE') und/oder Aktions- (BA') und/oder Inhaltsdatenbanken (BC') empfängt (empfangen).

5. System zur Sendung (100) nach Anspruch 4, wobei die lokale(n) Datenbank(en) (BE, BA, BC) dauerhaft mit der oder den entfernten Datenbank(en) (BE', BA', BC') verbunden ist (sind).

6. System zur Sendung (100) nach einem der Ansprüche 1 bis 5, wobei eine oder alle lokale(n) Datenbank(en) (BE, BA, BC) außerhalb des Heimnetzwerks ist (sind).

7. System zur Sendung (100) nach Anspruch 6, wobei das mindestens eine Ermittlungs- (1), Wahl- (2) und Sendemittel (3) beim Empfang eines Ereignisses (E) automatisch mit den ausgelagerten Datenbanken (BE, BA, BC) verbindet.

8. System zur Sendung (100) nach einem der Ansprüche 1 bis 7, wobei die durch das mindestens eine Ermittlungsmittel (1) nicht identifizierten Ereignisse (E) in einem spezifischen Fluss (FE') veröffentlicht werden, indem für jedes nicht identifizierte Ereignis (E) alle Informationen angegeben werden, die durch das mindestens eine Ermittlungsmittel (1) erhoben werden.

9. System zur Sendung (100) nach Anspruch 8, wobei der spezifische Fluss (FE') nach Genehmigung des Nutzers (5) anonym in einem regelmäßigen Intervall entweder durch das Ermittlungsmittel (1) oder durch das Wahlmittel (2) zu einer entfernten Datenbank veröffentlicht wird.

10. System zur Sendung (100) nach einem der Ansprüche 1 bis 9, wobei sich das Sendemittel (3), wie ein Mobiltelefon, außerhalb des Heimnetzwerks (RD) befindet, jedoch anhand eines öffentlichen und gemeinsam nutzbaren Netzwerks, wie eines GSM-Netzes, erreichbar ist.

11. System zur Sendung (100) nach einem der Ansprüche 1 bis 10, wobei das mindesten eine Ermittlungsmittel (1) und das mindestens eine Wahlmittel (2) jeweils einen Cache-Zwischenspeicher, jeweils für die ermittelten Ereignisse (E_{id}) und die auszuführenden Aktionen (A_{id}) umfassen.

12. Verfahren zur Sendung einer gezielten Information für ein Heimnetzwerk (RD), mit dem mindestens ein elektronisches Gerät (4) verbunden ist, das Bearbeitungsmittel umfasst, wobei das Verfahren in dieser Reihenfolge die folgenden Schritte beinhaltet:
- Inventarisieren des mindestens einen elektronischen Geräts (4) bei der ersten Aktivierung des mindestens einen elektronischen Geräts (4) und bei jeder Verbindung/ Trennung des elektronischen Geräts (4) im Heimnetzwerk (RD),
- Identifizieren des mindestens einen elektronischen Geräts (4), das mit dem Heimnetzwerk (RD) verbunden ist,
- Ermitteln eines Ereignisses (E) und Identifizieren eines Ereignisses (E_{id}) durch mindestens ein Ermittlungsmittel (1) bestehend aus:
Sammeln von Informationen (6), die durch mindestens einen Hardware-Sensor generiert werden, mit dem das oder die elektronischen Geräte ausgerüstet sind, nach dem Ermitteln eines Ereignisses (E) durch den mindestens einen Hardware-Sensor,
Interpretieren dieser Informationen (6) mithilfe einer lokalen Ereignis-Datenbank (BE), umfassend eine Gesamtheit (EE) an Ereignisdefinitionen,
Zuweisen zum Ereignis (E) einer Datenstruktur eines identifizierten Ereignisses (E_{id}) aus der Gesamtheit (EE) an Ereignisdefinitionen, wobei jede einer eindeutigen elektronischen Ereigniskennung (id_{E}) zugewiesen ist, und
Veröffentlichen der elektronischen Ereigniskennung (id_{E}), die dem identifizierten Ereignis (E_{id}) in einem Ereignisfluss (FE) zugewiesen ist, der das Heimnetzwerk (RD) durchläuft,
Benachrichtigen mindestens eines Wahlmittels (2) über die Aktualisierung des Ereignisflusses (FE), der das Heimnetzwerk (RD) durchläuft, mithilfe einer Benachrichtigungsadresse des mindestens einen Wahlmittels (2), die in einer lokalen Datenbank abgelegt ist,
- wobei die Auswahl einer Aktion (A_{id}) durch ein Wahlmittel (2) aus Folgendem besteht:
Sammeln des Ereignisflusses (FE), der das Heimnetzwerk (RD) durchläuft,
Interpretieren der elektronischen Kennung (id_{E}), die dem identifizierten Ereignis (E_{id}) zugewiesen ist, das dem Ereignisfluss (FE) gleichgestellt ist, mithilfe einer lokalen Aktionsdatenbank (BA), die eine Gesamtheit (EA) an Aktionsdefinitionen umfasst,
Ableiten der Auswahl einer Aktion (A_{id}) aus der Gesamtheit (EA) an Aktionsdefinitionen in Abhängigkeit von der elektronischen Kennung (id_{E}) des identifizierten Ereignisses (E_{id}), wobei jede einer eindeutigen elektronischen Aktionskennung (id_{A}) zugewiesen ist, und mithilfe einer lokalen Aktionsdatenbank (BA), die Regeln zum Abzielen enthält, und
Veröffentlichen der elektronischen Kennung (id_{A}), die der ausgewählten Aktion (A_{id}) in einem Ereignisfluss (FA) zugewiesen ist, der das Heimnetzwerk (RD) durchläuft,
Verbinden mit einer entfernten Aktionsdatenbank (BA'), um die lokale Aktionsdatenbank (BA) anhand eines Aktualisierungsflusses (FA') zu aktualisieren,
Benachrichtigen des mindestens einen Sendemittels (3) über die Aktualisierung des Aktionsflusses (FA), der das Heimnetzwerk (RD) durchläuft, mithilfe einer Benachrichtigungsadresse des mindestens einen Sendemittels (3), die in einer lokalen Datenbank abgelegt ist,
- wobei die Sendung eines Inhalts einer gezielten Information (C_{id}) zu einem Endnutzer (5) durch mindestens ein Sendemittel (3) aus Folgendem besteht:
Sammeln des Aktionsflusses (FA), der das Heimnetzwerk (RD) durchläuft, um die Informationen über die letzte(n) auszuführende(n) Aktion(en) (A_{id}) nach dem Empfangen der Aktualisierungsbenachrichtigung oder auf dessen eigene Initiative zu erheben,
Interpretieren der elektronischen Aktionskennung (id_{A}), die der ausgewählten Aktion (A_{id}) zugewiesen ist, die dem Aktionsfluss (FA) gleichgestellt ist, eventuell mithilfe einer lokalen Inhaltsdatenbank (BC), die eine Gesamtheit (EC) an Inhaltsdefinitionen umfasst,
Ausführen der Aktion (A_{id}) zu einem vorbestimmten Zeitpunkt durch Senden der Inhalte einer gezielten Information (C_{id}) in Abhängigkeit von der elektronischen Kennung (id_{A}) der ausgewählten Aktion (A_{id}).

13. Verfahren zur Sendung nach Anspruch 12, wobei der Schritt des Sendens eines Inhalts (C_{id}) zu einem Endnutzer (5) durch mindestens ein Sendemittel (3) eine Anfrage zu dem mindestens einen Wahlmittel (2) auslöst, damit es seine Gesamtheit (EA) an Aktionsdefinitionen aus einer oder mehreren entfernten Datenbanken (BA') aktualisiert, danach das mindestens eine Wahlmittel (2) seinerseits eine Anfrage zu dem mindestens einen Ermittler (1) auslöst, damit er seine Gesamtheit an Ereignisdefinitionen (EE) aus einer oder mehreren entfernten Datenbanken (BE') aktualisiert.

14. Verfahren zur Sendung nach Anspruch 12, wobei der Schritt zur Wahl einer Aktion (A_{id}) durch ein Wahlmittel (2) eine Anfrage zu dem mindestens einen Ermittler (1) auslöst, damit er seine Gesamtheit an Ereignisdefinitionen (EE) aus einer oder mehreren entfernten Datenbanken (BE') aktualisiert.

## Claims

1. A system for broadcasting (100) targeted information for a home network (RD) to which at least one electronic apparatus (4) comprising processing means is connected, said broadcasting system comprising:
- at least one detection agent (1) of a predefined event (E_{id}), the at least one detection agent (1) being disposed on the at least one electronic apparatus (4);
- at least one selection agent (2) of an action (A_{id}) to be achieved, the at least one selection agent (2) being disposed on the at least one electronic apparatus (4); and
- at least one broadcasting agent (3) of a targeted information content (C_{id}) to an end user (5), the at least one broadcasting agent (3) being disposed on the at least one electronic apparatus (4);
The at least one detection agent being arranged:
to collect information (6) generated by at least one hardware sensor equipping the electronic apparatus(es) following the detection of an event (E) by the at least one hardware sensor,
to interpret these information (6) using an event local database (BE) comprising a set (EE) of event definitions,
to associate to the event (E) an identified event data structure (E_{id}) among the set (EE) of event definitions, each being associated with a unique electronic event identifier (id_{E}), and
to publish the electronic event identifier (id_{E}) associated with the identified event (E_{id}) in an events flow (FE) browsing the home network (RD),
to notify the at least one selection agent (2) of the event flow (FE) update browsing the home network (RD) using a notification address of the at least one selection agent (2) stored in a local database,
- the at least one selection agent (2) being arranged:
to collect the event flow (FE) browsing the home network (RD),
to interpret the electronic identifier (id_{E}) associated with the identified event (E_{id}) assimilated to the event flow (FE) using an action local database (BA) comprising a set (EA) of action definitions,
to deduce the selection of an action (A_{id}) from the set (EA) of action definitions depending on the electronic identifier (id_{E}) of the identified event (E_{id}), each being associated with a unique electronic action identifier (id_{A}) and using an action local database (BA) containing targeting rules, and
to publish the electronic identifier (id_{A}) associated with the selected action (A_{id}) in an actions flow (FA) browsing the home network (RD),
to be connected to an action remote database (BA') in order to update the action local database (BA) through an update flow (FA'),
to notify the at least one broadcasting agent (3) of the action flow update (FA) browsing the home network (RD) using a notification address of the at least one broadcasting agent (3) stored in a local database,
- the at least one broadcasting agent (3) being arranged:
to collect the actions flow (FA) browsing the home network (RD) in order to retrieve the information on the last action(s) (A_{id}) to be executed, following the receiving of the update notification or on its own initiative,
to interpret the electronic action identifier (id_{A}) associated with the selected action (A_{id}) assimilated to the actions flow (FA), possibly using a local contents database (BC) comprising a set (EC) of content definitions,
to execute the action at a predetermined time by broadcasting targeted information contents (C_{id}) depending on the electronic identifier (id_{A}) of the selected action (A_{id}),
to transmit the encrypted event (id_{E}), the action (id_{A}) and the content (idc) identifiers in case of a transaction T following the action execution (A_{id})
the detection (1), selection (2) and broadcasting (3) agents executing tasks in separate execution contexts on processing means of the at least one electronic apparatus (4) connected to the home network (RD).

2. The broadcasting system (100) according to claim 1 wherein the home network (RD) can be connected to at least one remote server by means of an external network (RE), such as the Internet network, and the data related to the identified events (E_{id}), to the selected actions (A_{id}) and to the broadcasted contents (C_{id}) are locally stored and communicated anonymously outside the home network and encrypted on the user action (5) of the home network (RD) to the at least one remote server.

3. The broadcasting system (100) according to any of claims 1 to 2, wherein the information contained in local databases used by a first detection or selection agent are encrypted so as to prevent the access to these information by a second selection or broadcasting agent disposed downstream of the first agent in a data communication direction by the event flow and/or the action flow.

4. The broadcasting system (100) according to any of claims 1 to 3 wherein the event (BE) and/or action (BA) and/or content (BC) local database receives (receive) regular updates from respectively one or more (BE') event and/or action (BA') and/or content (BC') remote databases.

5. The broadcasting system (100) according to claim 4 wherein the local database(s) (BE, BA, BC) are permanently connected to the remote database(s) (BE', BA', BC').

6. The broadcasting system (100) according to any of claims 1 to 5 wherein one or all local databases (BE, BA, BC) are external to the home network.

7. The broadcasting system (100) according to claim 6 wherein the at least one detection (1), one selection (2) and one broadcasting (3) agent are automatically connected to outsourced databases (BE, BA, BC) following the receiving of an event (E).

8. The broadcasting system (100) according to any of claims 1 to 7 wherein the events (E) non-identified by the at least one detection agent (1) are published in a specific flow (FE'), by indicating all information collected by the at least one detection agent (1) for each non-identified event (E).

9. The broadcasting system (100) according to claim 8 wherein the specific flow (FE') is anonymously published on user's (5) authorization at regular intervals to a remote database either by the detection agent (1) or by the selection agent (2).

10. The broadcasting system (100) according to any of claims 1 to 9 wherein the broadcasting agent (3), such as a cell phone, is located outside the home network (RD) but accessible through a public and shared network, such as a GSM network.

11. The broadcasting system (100) according to any of claims 1 to 10 wherein the at least one detection agent (1) and the at least one selection agent (2) each comprise a cache memory respectively for the detected events (E_{id}) and the actions to be executed (A_{id}).

12. A method for broadcasting targeted information for a home network (RD) to which at least one electronic apparatus (4) comprising processing means is connected, said method including the steps in the following order:
- of making an inventory of the at least one electronic apparatus (4) during the first activation of the at least one electronic apparatus (4) and each connection/disconnection of the electronic apparatus (4) to the home network (RD),
- of identifying at least one electronic apparatus (4) connected to the home network (RD),
- of detecting an event (E) and identifying an event (E_{id}) by at least one detection agent (1) consisting of:
collecting information (6) generated by at least one hardware sensor equipping the electronic apparatus(es) following the detection of an event (E) by the at least one hardware sensor,
interpreting these information (6) using a local event database (BE) comprising a set (EE) of event definitions,
associating to the event (E) an identified event data structure (E_{id}) among the set (EE) of event definitions, each associated with a unique electronic event identifier (id_{E}), and
publishing the electronic event identifier (id_{E}) associated with the identified event (E_{id}) in an event flow (FE) browsing the home network (RD),
notifying at least one selection agent (2) of the event flow update (FE) browsing the home network (RD) using a notification address of the at least one selection agent (2) stored in a local database,
- of selecting an action (A_{id}) by a selection agent (2) consisting of:
collecting the event flow (FE) browsing the home network (RD),
interpreting the electronic identifier (id_{E}) associated with the identified event (E_{id}) assimilated to the event flow (FE) using a local action database (BA) comprising a set (EA) of action definitions,
deducing the selection of an action (A_{id}) from the set (EA) of action definitions depending on the electronic identifier (id_{E}) of the identified event (E_{id}), each being associated with a unique electronic action identifier (id_{A}) and using an action local database (BA) which contains targeting rules, and
publishing the electronic identifier (id_{A}) associated with the selected action (A_{id}) in an actions flow (FA) browsing the home network (RD),
being connected to a action remote database (BA') in order to update the action local database (BA) through an update flow (FA'),
notifying the at least one broadcasting agent (3) of the actions flow update (FA) browsing the home network (RD) using a notification address of the at least one broadcasting agent (3) stored in a local database,
- of broadcasting a targeted information content (C_{id}) to an end user (5) by at least one broadcasting agent (3) consisting of:
collecting the actions flow (FA) browsing the home network (RD) in order to retrieve the information on the last action(s) (A_{id}) to be executed, following the receiving of the update notification or at its own initiative,
interpreting the electronic action identifier (id_{A}) associated with the selected action (A_{id}) assimilated to the actions flow (FA), possibly using a local content database (BC) comprising a set (EC) of content definitions,
executing the action (A_{id}) at a predetermined time by broadcasting targeted information contents (C_{id}) depending on the electronic identifier (id_{A}) of the selected action (A_{id}).

13. The broadcasting method according to claim 12 wherein the step of broadcasting a content (C_{id}) to an end user (5) by at least one broadcasting agent (3) triggers a request to the at least one selection agent (2) in order to update its set of action definitions (EA) from one or more remote databases (BA'), then the at least one selection agent (2) triggers a request in turn to the at least one detector (1) in order to update its set of event definitions (EE) from one or more remote databases (BE').

14. The broadcasting method according to claim 12 wherein the step of selecting an action (A_{id}) by a selection agent (2) triggers a request to the at least one detector (1) in order to update its set of event definitions (EE) from one or more remote databases (BE').
